# EUROPÄISCHE PATENTSCHRIFT

(11) **EP 3 640 487 B1**
(45) Veröffentlichungstag und Bekanntmachung des Hinweises auf die Patenterteilung: **24.12.2025**
(21) Anmeldenummer: 19211612.7
(22) Anmeldetag: 13.04.2018
(51) Int. Cl.: F16B 25/00

(54) **HOLZSCHRAUBE MIT BOGENFÖRMIGEM ÜBERSTAND ZWISCHEN GEWINDEGÄNGEN**
WOOD SCREW WITH CURVED SUPERNATANT BETWEEN THREAD PASSAGES
VIS À BOIS DOTÉE D'UNE PROJECTION EN FORME D'ARC ENTRE LES PAS DE VIS

(30) Priorität: 18.04.2017 DE 102017108225
(43) Veröffentlichungstag der Anmeldung: 22.04.2020
(62) Teilanmeldung aus: 18167249.4
(73) Patentinhaber: Adolf Würth GmbH & Co. KG, 74653 Künzelsau (DE); Würth International AG, 7000 Chur (CH)
(72) Erfinder: Eckert, Rainer, 97990 Weikersheim (DE); Wunderlich, Andreas, 74635 Kupferzell (DE)
(74) Vertreter: Dilg, Haeusler, Schindelmann Patentanwaltsgesellschaft mbH

(56) Entgegenhaltungen:
- EP-A1- 0 939 235
- EP-A1- 2 679 835
- WO-A1-2016/180661
- CN-A- 1 188 859
- DE-A1- 102014 205 464
- US-A1- 2003 231 940
- US-A1- 2013 039 720
- US-B2- 6 739 815

## Beschreibung

Die Erfindung betrifft eine Schraube, ein Verfahren zum Einbringen einer Holzschraube in einen Holzuntergrund, ein Verfahren zum Herstellen einer Holzschraube und eine Verwendung.

Eine Schraube ist ein Bolzen, der einen Antrieb aufweisen kann, wobei der Bolzen außen mit einem Gewinde versehen ist. Bei Schrauben mit Kopf dient die Ringfläche unter dem Kopf als Anschlag gegen das mit ihm zu befestigende Teil.

Beim Einbringen einer Schraube in Holz wird auf das Bilden einer Vorbohrung manchmal verzichtet, dann kann eine Holzschraube in einen massiven Holzuntergrund vorbohrungsfrei eingedreht werden. Dabei schneidet sich das Gewinde einer Holzschraube in dem Holzuntergrund sein Gegengewinde selbst. Ein Beispiel für eine bekannte Holzschraube ist die von der Firma Würth vertriebene Schraube Assy Plus oder Assy 3.0. Ein Maß für die Güte der Verankerung einer Holzschraube in einem Holzuntergrund ist der Auszugswert. Damit wird die Zugkraft bezeichnet, die zum Herausziehen der Holzschraube aus dem Holzuntergrund, mithin zum Überwinden der Haltekraft der Holzschraube in dem Holzuntergrund, erforderlich ist.

Wenngleich die bekannte Holzschraube vom Typ Assy Plus bzw. Assy 3.0 bereits sehr gute Auszugswerte zeigt, wäre eine weiter verbesserte Auszugsfestigkeit einer Holzschraube dennoch wünschenswert.

Die kommerziell vertriebene Schraube Spax 4CUT hat eine viereckige Ausprägung im Übergang vom Gewinde zum Schaft. Der Vorteil dieser Schraube besteht in der Reduzierung des Einschraubmomentes. Somit kann die Spax 4CUT gleichmäßig und mit geringem Kraftaufwand verarbeitet werden. Ferner werden auch die Energiereserven eines akkubetriebenen Werkzeugs geschont.

DE 102014205464 A1 offenbart eine Schraube, die ein sich von einem Schraubenantriebsende eines zylindrischen Schraubenschafts bis zu einer Schraubenspitze erstreckendes Gewinde enthält. Die Schraubenspitze ist am Ende eines vorderen Kegelabschnitts der Schraube angeordnet. Die Schraube enthält vier in Axialrichtung verlaufende Rippen, die im vorderen Ende des zylindrischen Schraubenschafts beginnen und bis fast zu der Schraubenspitze reichen. Im Bereich des Schraubenantriebsendes enthält die Schraube ebenfalls vier Rippen, die gegenüber den vorderen Rippen in Umfangsrichtung um den halben Winkelabstand zwischen jeweils zwei Rippen versetzt angeordnet sind.

EP 1411252 A2 offenbart eine Schraube mit einem Schaft, welcher an einem seiner beiden Enden mit einem Betätigungskopf und am anderen seiner beiden Enden mit einer kegeligen Spitze ausgebildet ist und welcher an der kegeligen Spitze und in dem an diese anschließenden Bereich mit einem Schraubgewinde ausgebildet ist. Der Schaft ist in seinem an die kegelige Spitze anliegenden Bereich zwischen den Gewindegängen mit in quer zur Drehrichtung der Schraube verlaufenden Rippen ausgebildet, durch welche beim Eindrehen der Schraube das Material durch Verdrängung verdichtet wird.

EP 2665941 A1 offenbart eine Spanplattenschraube mit einem Schraubenkopf, einem Schraubenschaft, einer Schraubenspitze, einem sich über mindestens einen Teil des Schraubenschafts und/oder die Schraubenspitze erstreckenden Gewinde sowie mit mehreren in Längsrichtung der Schraube verlaufenden Schaberippen, die einen dreieckigen Querschnitt mit einer abgeflachten Spitze aufweisen.

An einer Schraube können also an der Schraubenspitze Fräser angebracht werden, die parallel zur Schraubenachse verlaufen und einen konstanten quadratischen oder dreieckförmigen Querschnitt haben. Diese Fräser verringern das Einschraubmoment der Schraube beim Einschrauben in Holz. Allerdings verliert eine solche Schraube durch die Wirkung der Fräser Haltekraft im Holz, weil das Holz zwischen den tragenden Gewindegängen im eingebauten Zustand der Schraube abgefräst bzw. physisch zerstört wird. Umso höher der Fräser radial ausgebildet ist, desto stärker werden die Auszugskräfte reduziert.

US 6,739,815 B2 offenbart eine Holzschraube, aufweisend: einen Schaft; eine Schraubenspitze; Gewindegänge, die umfänglich auf zumindest einem Teil des Schafts bis hinein in die Schraubenspitze, verlaufen; mindestens einen bogenförmigen Überstand zwischen zumindest zwei benachbarten der Gewindegänge, wobei eine Hauptverlaufsrichtung des Überstands in einer Draufsicht auf die Holzschraube gegenüber einer axialen Richtung der Holzschraube im Gegenuhrzeigersinn um einen Winkel von 120° (entsprechend 60° im Uhrzeigersinn) verkippt ist.

EP 0 939 235 A1 offenbart eine Holzschraube, aufweisend: einen Schaft; eine Schraubenspitze; Gewindegänge, die umfänglich auf zumindest einem Teil des Schafts bis hinein in die Schraubenspitze, verlaufen; eine erste Gruppe mit mindestens einem bogenförmigen Überstand zwischen zwei benachbarten Gewindegängen und eine zweite Gruppe mit mindestens einem bogenförmigen Überstand zwischen zwei anderen benachbarten Gewindegängen, wobei eine Hauptverlaufsrichtung des jeweiligen Überstands in einer Draufsicht auf die Holzschraube gegenüber einer axialen Richtung der Holzschraube im Gegenuhrzeigersinn um einen Winkel zwischen 5° und 20° verkippt ist. Die Überstände der beiden Gruppen sind zueinander fluchtend angeordnet. WO 2016/180661 A1 offenbart eine weitere Holzschraube des Standes der Technik.

Es ist eine Aufgabe der vorliegenden Erfindung, eine Holzschraube zu schaffen, mit der Spaltkräfte reduziert und dennoch hohe Auszugskräfte erreicht werden können.

Diese Aufgabe wird durch die Gegenstände mit den Merkmalen gemäß den unabhängigen Patentansprüchen 1, 13, 14 und 15 gelöst. Weitere Ausführungsbeispiele sind in den abhängigen Ansprüchen gezeigt.

Gemäß einem Aspekt der vorliegenden Erfindung, gemäß Anspruch 1, ist eine Holzschraube geschaffen, die einen Schaft, eine Schraubenspitze, Gewindegänge, die umfänglich auf zumindest einem Teil des Schafts (insbesondere bis hinein in die Schraubenspitze) verlaufen, eine erste Gruppe mit mindestens einem bogenförmigen Überstand zwischen zwei benachbarten Gewindegängen und eine zweite Gruppe mit mindestens einem bogenförmigen Überstand zwischen zwei anderen benachbarten Gewindegängen aufweist. Eine Hauptverlaufsrichtung des jeweiligen Überstands in einer Draufsicht auf die Holzschraube ist gegenüber einer axialen Richtung der Holzschraube im Gegenuhrzeigersinn um einen Winkel zwischen 5° und 40° verkippt, und alle Überstände sind so angeordnet, dass sie nicht zueinander fluchten.

Gemäß einem anderen Aspekt der vorliegenden Erfindung, gemäß Anspruch 13, ist ein Verfahren zum Einbringen einer Holzschraube mit den oben beschriebenen Merkmalen in einen Holzuntergrund (insbesondere in einen Massivholzuntergrund) bereitgestellt, wobei bei dem Verfahren der Holzuntergrund (insbesondere ohne Vorbohrung eines Bohrlochs in dem Holzuntergrund, in das nachfolgend die Holzschraube eingeführt wird) bereitgestellt wird, und die Holzschraube (insbesondere vorbohrungsfrei und/oder selbstfurchend bzw. gewindeschneidend) in den Holzuntergrund eingedreht wird.

Gemäß noch einem anderen Aspekt der vorliegenden Erfindung, gemäß Anspruch 14, ist ein Verfahren zum Herstellen einer Holzschraube geschaffen, wobei bei dem Verfahren ein Schaft und eine sich daran (insbesondere direkt, d.h. ohne dazwischen angeordnete weitere Struktur, oder indirekt, d.h. mit mindestens einer dazwischen angeordneten weiteren Struktur) axial anschließende Schraubenspitze gebildet werden, Gewindegänge gebildet werden, die sich umfänglich auf zumindest einem Teil des Schafts (insbesondere bis in die Schraubenspitze hinein) erstrecken, und eine erste Gruppe mit zumindest einem bogenförmiger Überstand zwischen zumindest zwei benachbarten Gewindegängen und eine zweite Gruppe mit mindestens einem bogenförmigen Überstand zwischen zwei anderen benachbarten Gewindegängen auf dem Schaft und/oder auf der Schraubenspitze gebildet wird. Eine Hauptverlaufsrichtung des jeweiligen Überstands in einer Draufsicht auf die Holzschraube ist gegenüber einer axialen Richtung der Holzschraube im Gegenuhrzeigersinn um einen Winkel zwischen 5° und 40° verkippt und alle Überstände werden so angeordnet, dass sie nicht zueinander fluchten.

Gemäß einem weiteren Aspekt der vorliegenden Erfindung, gemäß Anspruch 15, wird eine Holzschraube mit den oben beschriebenen Merkmalen zum insbesondere vorbohrungsfreien Einbringen in einen Holzuntergrund verwendet.

Im Rahmen der vorliegenden Anmeldung kann unter dem Begriff "bogenförmiger Überstand" eine gegenüber dem Schaft bzw. der Schraubenspitze in radialer Richtung vorstehende Erhebung oder Ausbuchtung verstanden werden, die zumindest abschnittsweise die Form von einem oder mehreren Bögen aufweist. Ein solcher bogenförmiger Überstand kann insbesondere als axial konvexer Körper ausgebildet sein. Ein solcher konvexer Körper kann aus dem Schaft herauswachsen, sich dann in axialer Richtung bis zu einer radialen Maximaldicke erweitern, um dann weiter in axialer Richtung wieder in den Schaft hineinzuwachsen. In einer Ausführungsform kann der bogenförmige Überstand nur aus genau einem gekrümmten Bogen bestehen. In einer anderen Ausführungsform kann der bogenförmige Überstand nur abschnittsweise bogenförmig ausgebildet sein und kann darüber hinaus einen oder mehrere weitere Abschnitte aufweisen, zum Beispiel einen oder mehrere weitere Bögen. Eine solche Bogenform kann durch eine kontinuierliche oder durchgehende Krümmung des Überstands zwischen zwei Enden unter zwischenzeitlicher Ausbildung eines lokalen Maximums ausgebildet sein. Es sind aber auch Abstufungen in Form von Kanten oder Stufen an dem bogenförmigen Überstand möglich. Die Bogenform kann in axialer Richtung der Holzschraube ausgebildet sein. Alternativ oder ergänzend kann die Bogenform aber auch in Tangentialrichtung der Holzschraube bzw. des Schafts ausgebildet sein. Wenn ein Überstand sowohl in Axialrichtung als auch in Tangentialrichtung bogenförmige Komponenten aufweist, kann die Axialerstreckung des bogenförmigen Überstands länger sein als die Tangentialerstreckung des bogenförmigen Überstands.

Im Rahmen der vorliegenden Anmeldung kann unter dem Begriff "Schaft" oder Bolzen insbesondere ein axial und radial zentraler Abschnitt der Holzschraube verstanden werden, der in axialer Richtung zwischen einer Schraubenspitze und einem der Schraubenspitze gegenüberliegenden anderen Ende der Holzschraube angeordnet ist. Ein solcher Schaft kann zum Beispiel ein kreiszylindrischer Körper sein, auf dem Gewindegänge radial überstehend angeformt sind. Auch ein oder mehrere bogenförmige Überstände kann oder können zumindest teilweise an dem Schaft angeformt sein. An ein der Schraubenspitze gegenüberliegendes Ende des Schafts kann sich optional ein gewindefreier Abschnitt anschließen, kann sich direkt oder indirekt ein Schraubenkopf anschließen oder kann die dann bolzenartig ausgebildete Holzschraube ohne radial aufgeweiteten Schraubenkopf enden.

Im Rahmen der vorliegenden Anmeldung kann unter "Gewindegängen" insbesondere eine helikal um den Schaft bzw. die Schraubenspitze umlaufende Erhöhung verstanden werden, die ein Eindrehen der Holzschraube in einen Untergrund fördern und die Auszugskräfte erhöhen kann. Ein solches Gewinde, das durch die Gewindegänge gebildet wird, kann insbesondere als selbstschneidendes oder selbstfurchendes Gewinde ausgebildet sein. Weiter vorzugsweise können die Gewindegänge selbst bei vorbohrungsfreiem Einbringen der Holzschraube in einen Untergrund selbstschneidend bzw. selbstfurchend ein Gegengewinde in dem Untergrund ausbilden.

Im Rahmen der vorliegenden Anmeldung kann unter dem Begriff "Schraubenspitze" insbesondere ein axialer Endabschnitt der Holzschraube verstanden werden, der gegenüber dem Schaft radial verjüngt sein kann. Der Endabschnitt kann bei bestimmungsgemäßer Einführung der Holzschraube in einen Untergrund als erster Abschnitt der Holzschraube in den Untergrund eindringen. Die Schraubenspitze kann zum Beispiel auf das Ende der Holzschraube punktförmig zulaufen. Dann kann die Schraubenspitze zum Beispiel kegelförmig ausgebildet sein. Alternativ kann die Schraubenspitze zum Beispiel am Ende der Holzschraube in einer geradlinigen oder gekrümmten Schneidkante münden.

Gemäß einem exemplarischen Ausführungsbeispiel ist eine Holzschraube geschaffen, die mit hohen Auszugswerten und geringer Spaltneigung in einen Untergrund (insbesondere einen Holzuntergrund) einbringbar ist. Wenn die Holzschraube zum Beispiel mittels eines Antriebswerkzeugs (etwa ein Schraubendreher oder ein Akkuschrauber) in den (insbesondere aus Holz ausgebildeten) Untergrund eingeführt (insbesondere eingedreht) wird, vermindert mindestens einer der bogenförmigen Überstande eine ansonsten bestehende Neigung der Gewindegänge, den Untergrund (insbesondere das Holz) zu spalten. Die Bogenform vermeidet eine übermäßige Zerstörung des Materials des Untergrunds. Statt eine Spaltung des Untergrunds zu fördern, führt die Konfiguration aus Gewindegängen und mindestens einem der bogenförmigen Überstande dazu, dass sich das Material des Untergrunds im Zwischenbereich zwischen Gewindegängen und dem mindestens einem bogenförmigen Untergrund zerstörungsarm sammelt bzw. dort verdichtet wird. Insbesondere können Holzfasern eines Holzuntergrunds in diesem Bereich komprimiert bzw. gestaucht bzw. zerteilt oder durchgetrennt werden. Durch das Unterdrücken einer unerwünschten Spaltwirkung kann die mechanische Integrität des Holzes oder sonstigen Untergrunds weitgehend gewahrt bleiben, wodurch die Auszugskräfte der Holzschraube erhöht werden. Diese hohe Auszugskraft wird zudem durch das Akkumulieren von Holzfasern oder anderem Material des Untergrunds in den Zwischenräumen zwischen dem einen oder mehreren bogenförmigen Überständen einerseits und den Gewindegängen andererseits gefördert. Beim Einbringen der Holzschraube in den Untergrund wird also zunächst die Schraubenspitze in den Untergrund eindringen, insbesondere und bevorzugt ohne Vorbohrung. Die Schraubenspitze wird sich nachfolgend immer tiefer in den Untergrund hineinfressen, wobei nachfolgende Gewindegänge in dem Holz eine Gewindeverankerung der Holzschraube bewirken. Die bogenförmigen Überstände erhöhen die Einführkraft der Holzschraube in den Untergrund allenfalls mäßig, sorgen aber mit Vorteil für eine Raffung, Komprimierung bzw. Verdrängung von Holzfasern oder anderem Material des Untergrunds, ohne dieses nennenswert zu zerstören. Im Ergebnis wird eine starke Verankerungskraft der Holzschraube in dem (Holz-) Untergrund bewirkt, was die Auszugskräfte erhöht. Das (insbesondere Holz-)Material des Untergrunds wird beim Einbringen der Holzschraube größtenteils unversehrt belassen, was die Haltekräfte weiter erhöht. Gemäß einem Ausführungsbeispiel der Erfindung mit einem oder mehreren Überständen mit Bogenform kann somit eine geringe Spaltkraft bei hohen Auszugskräften erreicht werden.

Im Weiteren werden zusätzliche exemplarische Ausführungsbeispiele der Schraube, der Verfahren und der Verwendung beschrieben.

Gemäß einem Ausführungsbeispiel kann eine maximale Radialerstreckung mindestens eines der bogenförmigen Überstande kleiner als eine maximale Radialerstreckung der Gewindegänge sein. Anders ausgedrückt kann sich mindestens einer der bogenförmigen Überstande selbst an seiner achsfernsten Position ausgehend von der Schraubenachse in radialer Richtung weniger weit weg erstrecken als die radiale Außenkante der Gewindegänge. Dadurch kann eine übermäßige Ausübung von Reibungskraft bzw. eine übermäßige Zerstörung des Einschraubuntergrundes von mindestens einem der bogenförmigen Überstande auf den (insbesondere Holz-) Untergrund vermieden werden und in der Konsequenz die Einführkraft moderat gehalten werden. Es kann durch die beschriebene Konfiguration des mindestens eines der bogenförmigen Überstande eine Spaltwirkung insbesondere von Holzmaterial durch die Gewindegänge wirksam unterdrückt. Gleichzeitig kann die Verankerungskraft der Holzschraube in dem Untergrund verbessert werden.

Gemäß einem nicht zur Erfindung gehörenden Vergleichsbeispiel kann sich mindestens einer der bogenförmigen Überstande ganz oder teilweise in Axialrichtung erstrecken. Der bogenförmige Überstand kann in Axialrichtung zwischen einem ersten Ende und einem zweiten Ende des Überstands im Wesentlichen geradlinig abgegrenzt sein, wobei sich bei einem nicht zur Erfindung gehörenden Vergleichsbeispiel die Enden nicht weiter als bis zu den unmittelbar benachbarten Gewindegängen hin erstrecken. Gemäß einem nicht zur Erfindung gehörenden Vergleichsbeispiel kann sich also der bogenförmige Überstand parallel zur Schraubenachse erstrecken. Alternativ kann der bogenförmige Überstand hinsichtlich seiner Erstreckungsrichtung auch eine Tangentialkomponente umfassen.

Es ist auch möglich, dass sich mindestens einer der bogenförmigen Überstande in einem Winkel von 90°, das heißt senkrecht, zu den Gewindegängen erstreckt. Mit Vorteil ist in letzterer Ausgestaltung die Wirkfläche senkrecht zu den Gewindegängen orientiert, die gegenüber einer axialen Richtung verkippt sein können. Der mindestens eine der Überstande kann also unter einem Winkel zur Axialrichtung verlaufen, insbesondere senkrecht zu einem jeweiligen Gewindegang.

Gemäß einem Ausführungsbeispiel kann zumindest ein Ende von zwei einander axial gegenüberliegenden Enden von zumindest einem der bogenförmigen Überstande auf einer Flanke eines der Gewindegänge enden. Ein jeweiliger Gewindegang kann durch eine ansteigende und eine abfallende Flanke gekennzeichnet sein, zwischen denen sich eine Position maximaler Radialerstreckung des Gewindegangs befindet. Wenn sich Ausläufer mindestens eines der bogenförmigen Überstande bis in einen angrenzenden Flankenabschnitt eines jeweils benachbarten Gewindegangs hinein erstrecken, bilden dieser Gewindegang und der jeweilige bogenförmige Überstand eine besonders stabile mechanische Einheit.

Gemäß einem Ausführungsbeispiel kann zumindest ein Ende von zwei einander axial gegenüberliegenden Enden von zumindest einem der bogenförmigen Überstande genau an einem Übergang (insbesondere an einer Knickstelle) zwischen einem Gewindegang und dem Schaft enden. Gemäß der beschriebenen Ausführungsform erstrecken sich die Ausläufer des bogenförmigen Überstands exakt bis zu einem Übergang zwischen Schaft und jeweiligem Gewindegang. Dadurch kann der Gewindegang ungeachtet des Vorsehens des Überstands unbeeinflusst verbleiben. Gleichzeitig wird eine ausreichend lange Axialerstreckung mindestens eines der bogenförmigen Überstande sichergestellt. Das Ergebnis ist eine hohe Auszugskraft bei einer geringen Spaltneigung verbunden mit einer moderaten Setzkraft der Schraube.

Gemäß einem Ausführungsbeispiel kann zumindest ein Ende von zwei einander axial gegenüberliegenden Enden von zumindest einem der bogenförmigen Überstande an dem Schaft mit Abstand zu einem angrenzenden Gewindegang enden. Gemäß einer solchen Ausgestaltung ist die Beeinflussung des Einschraubvorgangs mittels der Gewindegänge besonders klein, was ein besonders kraftarmes Einbringen der Holzschraube auch von Hand ermöglicht. Gleichzeitig können die freibleibenden Zwischenräume zwischen der jeweiligen Flanke des vorderseitigen oder hinterseitigen Gewindegangs einerseits und dem jeweiligen Ende des bogenförmigen Überstands andererseits beim Einbringen in den Untergrund mit Material des Untergrunds (insbesondere mit verdrängten Holzfasern) verfüllt werden, wodurch die Auszugskraft besonders groß wird.

Gemäß einem Ausführungsbeispiel kann zumindest einer der bogenförmigen Überstande seine maximale Radialerstreckung in axialer Richtung mittig zwischen zwei benachbarten der Gewindegänge haben. Insbesondere kann das lokale axiale Maximum des bogenförmigen Überstands hinsichtlich seines Radialabstands von dem Schaft bzw. der Schraubenachse genau in der Mitte zwischen zwei zu dem bogenförmigen Überstand unmittelbar benachbarten Gewindegängen liegen. Dadurch ist eine symmetrische Anordnung geschaffen, die in der Folge zu einer symmetrischen Krafteinleitung von der Holzschraube auf den Holzuntergrund führt. Zonen übermäßiger Kompression von Holzfasern können dadurch vermieden werden, so dass das Holzmaterial größtenteils intakt bleiben kann und die Auszugskraft erhöht werden kann.

Gemäß einem Ausführungsbeispiel kann die Schraubenspitze kegelförmig sein. Eine solche, sich hin zu einem spitzen Endpunkt konisch verjüngende Schraubenspitze ermöglicht ein besonders kraftarmes Einbringen der Holzschraube in den Untergrund und ein kontinuierliches Aufweiten desselben, um die Grundlage für das nachfolgende Einführen des radial breiteren Schafts mit seinen Gewindegängen in den Untergrund vorzubereiten. Durch eine kegelförmige Spitze wird das Material des Untergrunds auch vor einer übermäßigen Schädigung geschützt, insbesondere können verdrängte Holzfasern im Wesentlichen intakt bleiben.

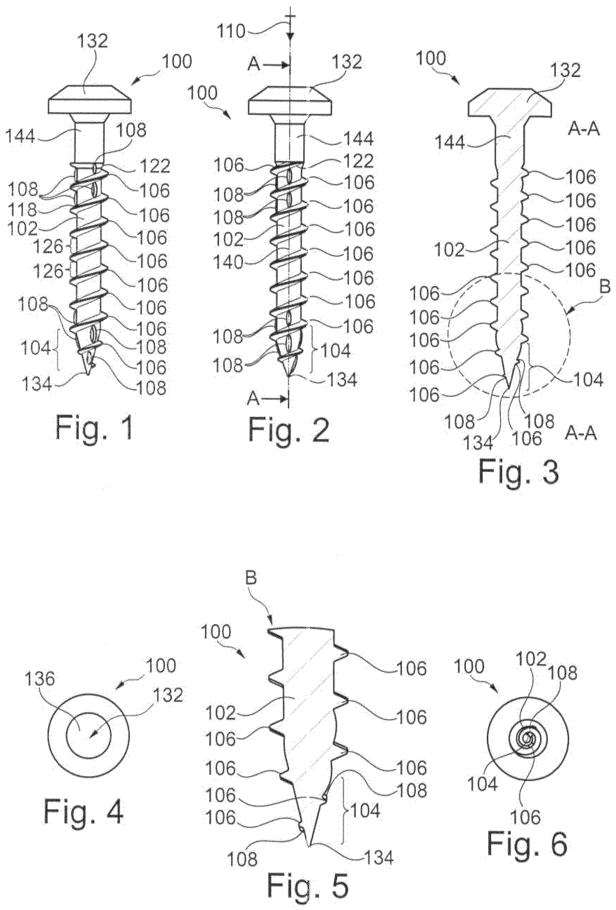

Gemäß einem Ausführungsbeispiel kann zumindest einer der bogenförmigen Überstande in seiner Haupterstreckungsrichtung (bzw. Längserstreckungsrichtung, zum Beispiel die vertikale Richtung in Figur 2) und/oder senkrecht zu seiner Haupterstreckungsrichtung (d.h. in seiner Quererstreckungsrichtung, zum Beispiel die horizontale Richtung in Figur 2) eine Form haben, die aus einer Gruppe ausgewählt ist, die besteht aus einer Halbmondform, einer Halbkreisform und einer Form mit mindestens zwei ineinander übergehenden (insbesondere in axialer Richtung ineinander übergehenden) Abschnitten der zuvor genannten Formen. Besonders bevorzugt ist eine halbmondförmige Geometrie des mindestens einen bogenförmigen Abschnitts in Axialrichtung. Dadurch kann ein besonders kraftarmes Eindringen der Holzschraube in den Untergrund ermöglicht werden, das heißt die Montagekraft gering gehalten werden. Gleichzeitig ermöglicht dies einen Vortrieb der Holzschraube mit sanfter Krafteinwirkung auf den Untergrund, was Letzteren vor einer übermäßigen Schädigung schützt und damit die Auszugswerte der Holzschraube steigert.

Gemäß einem Ausführungsbeispiel kann zumindest einer der bogenförmigen Überstande ausgehend von einer zentralen (insbesondere mittigen oder gegenüber einer Mitte axial versetzten) Position mit maximaler Radialerstreckung symmetrisch oder asymmetrisch in Richtung von zwei unmittelbar benachbarten Gewindegängen hin zu einander axial gegenüberliegenden Enden des Überstands verlaufen.

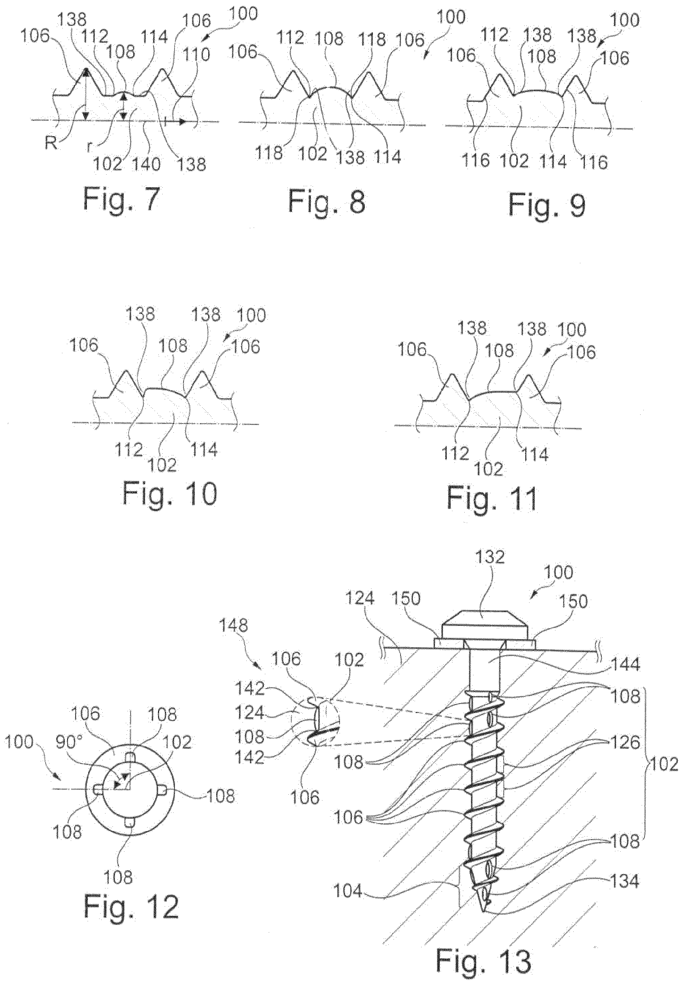

Insbesondere können bezüglich der Position der maximalen Radialerstreckung des bogenförmigen Überstands dessen schraubenspitzenseitiger Abschnitt und dessen schraubenspitzenferner (zum Beispiel schraubenkopfseitiger) Abschnitt zueinander spiegelsymmetrisch ausgebildet werden (siehe zum Beispiel Figur 7 bis Figur 9). Eine entsprechende Spiegelebene kann durch die Position der maximalen Radialerstreckung des bogenförmigen Überstands und senkrecht zur axialen Schraubenachse verlaufen. Eine solche Konfiguration führt zu einer gleichmäßigen Kraftübertragung auf die verschiedenen Bereiche der Holzschraube diesseits und jenseits der maximalen Radialerstreckung des bogenförmigen Überstands und des Untergrunds. Darüber hinaus können dann zwei spiegelbildliche Hinterschnitte zwischen Überstand und angrenzenden Gewindegängen gebildet werden, in denen zur weiteren Erhöhung der Auszugskraft jeweils Holzfasern oder anderes verdrängtes Untergrundmaterial zerstörungsarm komprimiert und aufgenommen werden kann.

Alternativ kann mit einer bewusst asymmetrischen Ausgestaltung des bogenförmigen Überstands in axialer Erstreckungsrichtung ein asymmetrischer Krafteintrag in Holzschraube und Untergrund bewirkt werden (siehe zum Beispiel Figur 10 und Figur 11). Ein solcher bogenförmiger Überstand verkeilt sich anschaulich besonders stark in dem umgebenden Material des Untergrunds, insbesondere mit Holzfasern desselben. Bei einer solchen asymmetrischen Konfiguration kann somit der Materialschwerpunkt des bogenförmigen Überstands in Richtung eines schraubenspitzenseitigen Gewindegangs oder in Richtung eines schraubenspitzenferneren Gewindegangs verschoben werden. Dadurch können stärker oder schwächer ausgeprägte Hinterschnitte generiert werden.

Gemäß einem bevorzugten Ausführungsbeispiel kann mindestens einer der bogenförmigen Überstande als scharfkantiger Fräser, d.h. zum Entfernen von Material des Untergrunds mittels Fräsens, ausgebildet sein. Im Rahmen der vorliegenden Anmeldung kann unter Fräsen insbesondere ein spanendes Verfahren zur Herstellung eines Bohrlochs in dem Untergrund mit geometrisch definierter Gestalt verstanden werden, bei dem von dem Untergrund Material in Form von Spänen entfernt wird. Bei einem solchen Fräsen mittels des einen oder mehreren Fräsers in Form eines jeweiligen bogenförmigen Überstands wird das Material des Untergrunds lokal entfernt, indem der Fräser bzw. die Fräse sich durch das Einbringen der Holzschraube in den Untergrund um seine bzw. ihre eigene Achse dreht. Gemäß einem solchen bevorzugten Ausführungsbeispiel kann der mit einer bogenförmigen Fräskante bzw. Schneidkante ausgestattete bogenförmige Überstand als Fräser fungieren und Material des Untergrunds mittels Fräsens wirksam schneiden. In dieser Ausgestaltung wird somit Material des Untergrunds nicht nur von dem Aufenthaltsbereich des bogenförmigen Überstands aus verdrängt, sondern auch vom restlichen Material des Untergrunds mittels Schneidens abgetrennt oder zerteilt. Im Beispiel eines Holzuntergrunds führt das zum Abtrennen von Holzfasern begrenzt auf den unmittelbaren Umgebungsbereich des bogenförmigen Überstands. Das Wegfräsen von Material des Untergrunds führt zu einer niedrigen Setzkraft beim Einbringen der Holzschraube in dem Untergrund. Ferner wird das Schneiden eines Gewindes in dem Untergrund mittels der Gewindegänge durch diese Maßnahme erleichtert bzw. unterstützt. Durch die lokal strikt begrenzte Fräswirkung mindestens eines der Überstande bleibt der Untergrund dennoch großvolumig unversehrt, so dass eine hohe Auszugskraft erreicht wird.

Gemäß einem Ausführungsbeispiel kann mindestens einer der bogenförmigen Überstande eine stumpfe Kante aufweisen. Alternativ oder ergänzend zu der zuvor beschriebenen Ausführungsform kann also der bogenförmige Überstand gezielt mit einer stumpfen außenseitigen Kante versehen sein, um ein Abtrennen und damit Schwächen des die Holzschraube umgebenden Untergrunds zu vermeiden. Anschaulich führt die stumpfe Kante mehr zu einer Komprimierung des Holzes als zu einem Zerteilen. Dies führt zu einer besonders hohen Auszugskraft.

Gemäß einem Ausführungsbeispiel kann mindestens einer der bogenförmigen Überstande vollständig im Bereich des Schafts ausgebildet sein. Der Schaft mit seinen Gewindegängen definiert bei einem Ausführungsbeispiel (von einem optionalen Schraubenkopf abgesehen) den radial breitesten Bereich der Holzschraube über deren Axialerstreckung hinweg. Wenn ein oder mehrere radiale bogenförmige Überstände im Bereich des Schafts auf diesen aufgesetzt bzw. angestückt oder angeformt werden, wird eine radial besonders weit außenseitige Verdrängungswirkung auf Untergrundmaterial ausgeübt und somit eine besonders wirksame Erhöhung der Auszugskraft bewerkstelligt.

Wenn einer oder mehrere solche bogenförmige Überstände in einem schraubenspitzenfernsten (insbesondere in einem schraubenkopfseitigen) Endabschnitt des Schafts zwischen dortigen Gewindegängen angebracht werden, führt dies dazu, dass die in gewisser Weise eine Einbringkraft erhöhende Anwesenheit der bogenförmigen Überstände erst am Ende des Setzprozesses wirksam wird. Über einen größeren Zeitraum des Setzprozesses hinweg führen die bogenförmigen Überstände dann jedoch mit Vorteil zu keiner Erhöhung der Setzkraft.

Gemäß einem Ausführungsbeispiel kann mindestens einer der bogenförmigen Überstande vollständig im Bereich der Schraubenspitze ausgebildet sein. Bei der Anbringung von einem oder mehreren bogenförmigen Überständen im Bereich der Schraubenspitze erfolgt der Krafteintrag von mindestens einem der bogenförmigen Überstande auf das Untergrundmaterial in einem radial vergleichsweise achsennahen Bereich und im Bereich eines Bohrlochtiefsten. Damit wirkt der dortige bogenförmige Überstand tief im Material spaltmindernd, stabilisierend und auszugshemmend.

Gemäß einem Ausführungsbeispiel kann mindestens einer der bogenförmige Überstande sich zwischen dem Schaft und der Schraubenspitze erstrecken, mithin teilweise im Schaftbereich und teilweise um Schraubenspitzenbereich. Im Übergangsbereich oder Überbrückungsbereich zwischen Schraubenspitze und Schaft erfolgt eine Änderung der Krafteinwirkung von der Holzschraube auf den Untergrund während des Einbringprozesses. Daher ist die Spaltgefahr in diesem Bereich auch besonders groß. Wird ein bogenförmiger Überstand abschnittsweise noch im Schaft und abschnittsweise bereits in der Schraubenspitze angeordnet, so kann speziell an dieser kritischen Stelle eine unerwünschte Spaltung des (insbesondere Holz-) Untergrunds wirksam vermieden werden.

Gemäß einem nicht zur Erfindung gehörenden Vergleichsbeispiel können zumindest zwei bogenförmige Überstände zueinander tangential (d.h. in Umfangsrichtung des Schafts, in der sich auch die Gewindegänge erstrecken) winkelversetzt sein. Insbesondere können mehrere bogenförmige Überstände untereinander mit einem jeweils gleichen tangentialen Winkelabstand zueinander versetzt sein. Bei Anordnen mehrerer bogenförmiger Überstände mit einem (insbesondere konstanten) Winkelversatz relativ zueinander wird auch in Umfangsrichtung der Holzschraube ein im Wesentlichen symmetrisches Kraftfeld erzeugt. Dies reduziert weiter die Tendenz der Gewindegänge zur Spaltwirkung auf den (insbesondere holzfaserartigen) Untergrund. Auch sind im Hinblick auf die Auszugskraft umfängliche Schwachstellen der Holzschraube vermieden, wenn mehrere winkelversetzte bogenförmige Überstände ausgebildet werden.

Gemäß einem nicht zur Erfindung gehörenden Vergleichsbeispiel können mehrere bogenförmige Überstände (insbesondere eine oder mehrere Gruppen von Überständen oder sogar alle bogenförmigen Überstände) der Holzschraube in Axialrichtung fluchtend ausgebildet sein. Bei fluchtender Ausbildung aller oder mehrerer bogenförmiger Überstände, das heißt ausgerichtet entlang einer linearen gedanklichen Verbindungsachse, kann eine Schabe- bzw. Schneidachse präzise definiert werden.

Gemäß einem bevorzugten nicht zur Erfindung gehörenden Vergleichsbeispiel kann die Holzschraube mehrere in Axialrichtung fluchtende bogenförmige Überstände im Bereich der Schraubenspitze und mehrere ebenfalls in Axialrichtung fluchtende bogenförmige Überstände in einem schraubenkopfseitigen Endabschnitt der Gewindegänge des Schafts aufweisen. Bei einem solchen nicht zur Erfindung gehörenden Vergleichsbeispiel, das zum Beispiel in Figur 1 bis Figur 6 dargestellt ist, ist sowohl eine spaltungshemmende als auch eine auszugskrafterhöhende Wirkung sowohl im bohrlochtiefen als auch im oberflächennahen Bereich des Untergrunds geschaffen. Dies führt zu besonders hohen Auszugswerten bei stark unterdrückter Spaltneigung.

Gemäß einem Ausführungsbeispiel kann die Holzschraube zum vorbohrungsfreien Einbringen in einen Holzuntergrund (insbesondere in einen Massivholzuntergrund) ausgebildet sein. Wenngleich ein Einsatz der Holzschraube in unterschiedlichen Materialien eines Untergrunds möglich ist, ist die Verwendung als Holzschraube, das heißt zum Einbringen in einen Holzuntergrund, besonders bevorzugt. Dabei kann es sich bei dem Holzuntergrund weiter bevorzugt um einen Massivholzuntergrund mit vor dem Setzen der Holzschraube intakten Holzfasern handeln. Alternativ ist aber auch das Einbringen in einen Holzkomposituntergrund möglich. Ein Untergrund, in den eine Holzschraube gemäß einem exemplarischen Ausführungsbeispiel der Erfindung eingebracht wird, kann also ganz oder auch nur teilweise aus Holz bestehen. Zum Beispiel kann ein solcher Untergrund eine Spanplatte oder eine OSB- (oriented strand boards) Platte oder Grobspanplatte sein. Holz, insbesondere Massivholz, neigt bei einem starken Krafteintrag durch scharfe Gewindegänge dazu, unerwünscht gespalten zu werden. Dies zerstört den Holzuntergrund und reduziert die Haltekraft einer Schraube, die in diesen Holzuntergrund eingebracht ist. Wenn durch die beschriebenen Maßnahmen, insbesondere durch mindestens einen der bogenförmigen Überstande mit den beschriebenen Merkmalen, die Tendenz der Holzfasern zu einer Spaltung beim Eintreiben der Holzschraube in einen solchen Holzuntergrund zuverlässig unterdrückt wird, kann sich das Holzmaterial in Bereichen eines Hinterschnitts zwischen bogenförmigem Überstand und jeweils benachbarten Gewindegängen gedrängt ansammeln, was zu einer besonders hohen Haltekraft ohne weitreichende Zerstörung des Materials des Untergrunds führt.

Gemäß einem Ausführungsbeispiel kann zwischen einem jeweiligen bogenförmigen Überstand einerseits und zumindest einem der jeweiligen zwei daran angrenzenden der Gewindegänge ein Hinterschnitt zum Aufnehmen von Material eines Holzuntergrunds gebildet sein, in den die Holzschraube eingebracht ist. In solche Hinterschnittvolumina hinein können zum Beispiel Holzfasern oder dergleichen gedrängt und dort komprimiert werden, wenn die Holzschraube in einen Holzuntergrund eingedreht wird.

Vorzugsweise wird die Holzschraube vorbohrungsfrei in den Untergrund (insbesondere aus Holz) eingebracht. Dies ermöglicht eine besonders effiziente Verarbeitung der Holzschraube an einer Baustelle oder einem anderen Einsatzort, da das aufwendige Bohren von Vorbohrungen entbehrlich ist. Alternativ ist es bedarfsweise (zum Beispiel bei einem besonders harten Untergrund) auch möglich, eine solche Vorbohrung zu bilden, bevor die Holzschraube gesetzt wird, was dann zu besonders geringen Setzkräften führt.

Vorzugsweise bilden die Gewindegänge ein in Holzmaterial selbstschneidendes oder selbstfurchendes Gewinde. Dadurch kann insbesondere bei einer vorbohrungsfreien Montage der Holzschraube in einem Holzuntergrund ein zuverlässiges Ausbilden von zu dem Gewinde der Holzschraube inversen Gewindegängen in dem Holzuntergrund gefördert werden. Dadurch bildet sich auch ein Formschluss zwischen Gewindegängen und Holzuntergrund aus, was wiederum auszugskrafterhöhend wirkt.

Gemäß einem exemplarischen Ausführungsbeispiel kann ein Flankenwinkel von zumindest einem Teil der Gewindegänge in einem Bereich zwischen ungefähr 30° und ungefähr 70°, insbesondere in einem Bereich zwischen ungefähr 40° und ungefähr 60°, liegen. Derartige Flankenwinkel sind zum Erreichen einer besonders guten Haltekraft vorteilhaft, da dann die Gewindeflanken effizient an das Holz angreifen können.

Gemäß einem exemplarischen Ausführungsbeispiel kann die Schraubenspitze auf ein im Wesentlichen punktförmiges Ende der Holzschraube zulaufen. Gemäß einem anderen exemplarischen Ausführungsbeispiel kann die Schraubenspitze mindestens eine endseitige Schneidkante aufweisen. Hinsichtlich der Ausgestaltung der Schraubenspitze gibt es somit unterschiedliche Möglichkeiten, wobei die Schraubenspitze vorteilhaft so konfiguriert sein kann, dass die Holzschraube ohne Vorbohrung in einen massiven Holzuntergrund eingedreht werden kann.

Gemäß einer ersten Ausgestaltung kann die Schraubenspitze auf ein punktförmiges Ende der Holzschraube zulaufen, wobei sich das Gewinde direkt ausgehend von dem punktförmigen Ende entlang der Schraubenspitze und weiter entlang des Schafts erstrecken kann. Eine solche Ausgestaltung ist in Figur 1 gezeigt. Wenn der Gewindeansatz direkt an dem punktförmigen Ende beginnt, kann bei Ansetzen des punktförmigen Endes auf die (insbesondere nicht vorgebohrte) Oberfläche eines Holzuntergrunds das Gewinde unmittelbar greifen und mit dem selbstfurchenden bzw. selbstschneidenden Eindringen in den Untergrund beginnen. Mit dieser Ausgestaltung der Schraubenspitze ist ein Vorbohren entbehrlich und ein kraftarmes Einbringen ermöglichst, da der Zwangsvorschub des Gewindes einen Monteur gleich von Beginn des Setzvorgangs an unterstützt.

Gemäß einer alternativen zweiten Ausgestaltung kann die Schraubenspitze als Bohrspitze mit mindestens einer endseitigen Schneidkante ausgebildet sein. Eine solche, zum Beispiel lineare scharfe Schneidkante kann als mindestens eine Hauptschneide ausgebildet sein und wie bei einem Bohrer ein Loch in einem hölzernen Untergrund generieren. Optional kann auch noch mindestens eine Querschneide an der Bohrspitze vorgesehen sein, wie den Fachleuten auf dem Gebiet der Schrauben und Bohrer bekannt.

Gemäß einem exemplarischen Ausführungsbeispiel kann ein Schraubenkopf oder ein freies Bolzenende der Holzschraube mit einem Antrieb zum Drehantreiben der Holzschraube versehen sein. Ein solcher Antrieb dient zum formschlüssigen Kontakt mit einem Werkzeug zum Eindrehen der Schraube, wie zum Beispiel ein muskelbetriebener Schraubendreher oder ein motorbetriebenes Setzgerät (zum Beispiel ein Akkuschrauber). Ein rückseitiges Ende der Holzschraube kann somit durch den Schraubenkopf mit einem Antrieb zum Drehantreiben der Holzschraube gebildet sein. Der Antrieb kann als Längsschlitz, als Kreuzschlitz, als Imbus, als TORX-Antrieb oder als AW-Antrieb ausgebildet werden.

Gemäß einem exemplarischen Ausführungsbeispiel kann die Holzschraube optional einen zwischen dem Schraubenkopf und dem Schaft mit Gewinde angeordneten gewindefreien Abschnitt aufweisen. Anschaulich kann sich der Schaft mit Gewinde rückseitig bis zu einem glatten, gewindefreien Bereich der Holzschraube hin erstrecken. Dadurch kann die axiale Länge der Holzschraube erhöht werden, ohne dass die Gewindelänge übermäßig erhöht wird.

Gemäß einem exemplarischen Ausführungsbeispiel kann die Holzschraube mittels Drehbetätigens eines Antriebs (zum Beispiel in einer Stirnfläche an einem Schraubenkopf oder an einem freien Bolzenende des Schafts oder eines gewindefreien Abschnitts) angetrieben werden. Zum Beispiel kann ein muskelkraftbetriebener Schraubendreher oder ein motorkraftbetriebenes Schraubgerät eingesetzt werden, um die Holzschraube drehend in den Untergrund einzubringen. Ein Zwangsvorschub der Holzschraube in dem Untergrund kann dabei durch ein selbstschneidendes Gewinde der Holzschraube bewirkt werden, was das axiale Eindringen der Holzschraube in den Untergrund kraftarm ermöglicht.

Gemäß einem Ausführungsbeispiel kann die Holzschraube mittels Kaltmassivumformen (zum Ausbilden von Kopf bzw. Antrieb), Kneifen (zum Ausbilden der Schraubenspitze) und Walzen (zum Bilden des Gewindes) ausgebildet werden.

Gemäß einem exemplarischen Ausführungsbeispiel kann der Überstand zumindest teilweise beim Walzen des Gewindes ausgebildet werden. Dabei erfolgt lediglich eine für das Ausbilden des Überstands ausreichende Materialumlagerung, so dass das Aufbringen oder Entfernen von Material zum Ausbilden des oder der Überstände entbehrlich ist.

Gemäß einem exemplarischen Ausführungsbeispiel kann mindestens einer der Überstande zumindest teilweise beim Kneifen der Schraubenspitze ausgebildet werden. Auch gemäß dieser Ausgestaltung kann mindestens einer der Überstande hergestellt werden, ohne dass hierfür ein separater Arbeitsgang erforderlich ist.

Gemäß einem exemplarischen Ausführungsbeispiel kann die Holzschraube mindestens einen weiteren Überstand aufweisen, der sich über einen der Gewindegänge hinweg erstreckt, insbesondere einen der Gewindegänge kreuzt. Ein solcher weiterer Überstand kann sich aus dem (insbesondere kreiszylindrischen) Schaft und/oder aus der (insbesondere kegelförmigen) Schraubenspitze heraus erstrecken. Ein erster Abschnitt eines solchen weiteren Überstands kann auf einer Seite (zum Beispiel einer schraubenkopfseitigen Seite) eines zugeordneten Gewindegangs angeordnet sein, wohingegen ein gegenüberliegender zweiter Abschnitt eines solchen weiteren Überstands auf einer gegenüberliegenden anderen Seite (zum Beispiel einer schraubenspitzenseitigen Seite) des zugeordneten Gewindegangs angeordnet sein kann. Ein solcher weiterer Überstand oder mehrere solche weitere Überstände kann bzw. können also einen anderen Winkel mit einer Axialrichtung der Holzschraube aufweisen, insbesondere einen kleineren Winkel mit der Axialrichtung der Holzschraube aufweisen, als der den jeweiligen Überstand kreuzende Gewindegang. Auch ein oder mehrere solche weitere Überstände können dazu beitragen, beim Einbringen der Holzschraube in einen Holz aufweisenden oder aus Holz bestehenden Untergrund Holzfasern zu verdrängen, um das Setzen der Holzschraube in den Untergrund für einen Benutzer mit einem mäßigen Drehmoment zu erleichtern bzw. um ein Aufweiten des Bohrlochs an seiner Außenseite zu fördern. Weitere Überstände in einem Übergangsbereich zwischen dem Gewindeabschnitt und einem gewindefreien Abschnitt (der einen etwas größeren Außendurchmesser haben kann als der Gewindeabschnitt) können ein Spreizen des Holzes unterdrücken, wenn der gewindefreie Abschnitt mit seinem etwas größeren Außendurchmesser in den Holzuntergrund eindringt. Auf diese Weise können die weiteren Überstände den Lochbereich am Übergang zwischen dem Gewindeabschnitt und dem gewindefreien Abschnitt vorbereiten. Gleichzeitig kann durch die Funktion des oder der weiteren Überstände eine übermäßige Zerstörung des Holzmaterials des Untergrunds vermieden werden, wodurch hohe Auszugskräfte erreicht werden können.

Gemäß einem Ausführungsbeispiel kann der weitere Überstand als Fräskante (um Holzmaterial mittels Fräsens zu bearbeiten) oder stumpf (d.h. zur reinen Materialverdrängung von Holz) ausgebildet werden.

Gemäß einem exemplarischen Ausführungsbeispiel kann der mindestens eine weitere Überstand alternativ oder ergänzend zu mindestens einem der Überstande zwischen den Gewindegängen vorgesehen werden.

Gemäß einem exemplarischen Ausführungsbeispiel kann der mindestens eine weitere Überstand bogenförmig, insbesondere halbmondförmig, sein. Allgemeiner kann der zumindest eine weitere Überstand in seiner Haupterstreckungsrichtung und/oder senkrecht zu seiner Haupterstreckungsrichtung eine Form haben, die aus einer Gruppe ausgewählt ist, die besteht aus einer Halbmondform, einer Halbkreisform und einer Form mit mindestens zwei ineinander übergehenden (insbesondere in axialer Richtung ineinander übergehenden) Abschnitten der zuvor genannten Formen. Besonders bevorzugt ist eine halbmondförmige Geometrie des mindestens einen weiteren Überstands in Axialrichtung oder verkippt zur Axialrichtung. Durch die beschriebene Formgebung kann ein besonders drehmomentarmes Eindringen der Holzschraube in den Untergrund ermöglicht werden und der jeweilige weitere Überstand simultan vor einer übermäßigen Schädigung geschützt werden.

Gemäß einem exemplarischen Ausführungsbeispiel kann die Holzschraube eine Mehrzahl von sich über einen der Gewindegänge erstreckenden weiteren Überständen aufweisen, die in Tangential- bzw. Umfangsrichtung voneinander beabstandet sind und um den Schaft umlaufend winkelversetzt angeordnet sind. Einer der Gewindegänge kann also in Umfangsrichtung mit mehreren (insbesondere äquidistant) zueinander versetzten weiteren Überständen ausgestattet werden. Im Bereich dieses einen oder dieser mehreren Gewindegänge, der oder die mit weiteren Überständen versehen ist oder sind, kann dann eine gezielte und definierte Aufweitung des Bohrlochs ohne signifikante Zerstörung der zugeordneten Holzfasern erfolgen.

Gemäß einem exemplarischen Ausführungsbeispiel kann der mindestens eine weitere Überstand in einem Bereich des Schafts gebildet sein, an den sich ein Schraubenkopf oder ein gewindefreier Bolzenabschnitt anschließt. Insbesondere kann sich der mindestens eine weitere Überstand in einem Bereich des Schafts befinden, welcher der Schraubenspitze gegenüberliegt. Der mindestens eine weitere Überstand kann einen der beiden schraubenspitzenfernsten Gewindegänge kreuzen. Weiter insbesondere kann der mindestens eine weitere Überstand (noch weiter insbesondere nur) einen schraubenspitzenfernsten Gewindegang kreuzen.

Gemäß einem exemplarischen Ausführungsbeispiel kann der mindestens eine weitere Überstand seine maximale Radialerstreckung im Bereich eines jeweiligen Maximums des jeweiligen Gewindegangs haben. Anschaulich kann der weitere Überstand aus dem Schaft herauswachsen, im Schnittbereich mit dem zugeordneten Gewindegang sein radiales Maximum erreichen und nachfolgend wieder in den Schaft hineinwachsen.

Gemäß einem exemplarischen Ausführungsbeispiel kann eine maximale Radialerstreckung des mindestens einen weiteren Überstands geringer sein als eine maximale Radialerstreckung des zugeordneten Gewindegangs. Auf diese Weise kann sichergestellt werden, dass der mindestens eine weitere Überstand nicht die gewindeformende Funktion der Gewindegänge beeinträchtigt. Dennoch kann der mindestens eine weitere Überstand seine holzverdrängende und ggf. fräsende Funktion wahrnehmen. Im Bereich des radialen Maximums des weiteren Überstands kann sich dieser in radialer Richtung also weniger weit nach außen hin erstrecken als der gekreuzte Gewindegang. Dadurch können auch eine übermäßige Aufweitung des Bohrlochs und eine übermäßige Schädigung von Holzmaterial vermieden werden und daher hohe Auszugskräfte erreicht werden.

Gemäß einem exemplarischen Ausführungsbeispiel kann zumindest einer der Überstande und des mindestens einen weiteren Überstands in einem spitzen Winkel zu einer Axialrichtung das Schafts verlaufend angeordnet sein. Gemäß dieser Ausgestaltung weicht die Hauptverlaufsrichtung des Überstands bzw. des weiteren Überstands von einer Axialrichtung des Schafts ab. Es hat sich herausgestellt, dass bei einer leichten Schrägstellung des jeweiligen Überstands bzw. weiteren Überstands die Krafteinleitung in den Untergrund vorteilhaft ist und gleichzeitig mäßige Setzkräfte mit hohen Auszugskräften kombiniert werden können.

Gemäß einem exemplarischen Ausführungsbeispiel der Erfindung kann ein jeweiliger des einen weiteren Überstands oder der mehreren weiteren Überstände, der einen Gewindegang kreuzt, eine Erstreckungsrichtung senkrecht zu diesem Gewindegang haben. Anders ausgedrückt kann ein solcher weiterer Überstand den zugehörigen Gewindegang rechtwinklig kreuzen. Gemäß einem solchen Ausführungsbeispiel kann sowohl dieser Gewindegang als auch der zugehörige Überstand schräg zur Schraubenachse verlaufend angeordnet sein. Diese Geometrie führt zu einer günstigen Krafteinleitung.

Alternativ oder ergänzend ist es auch möglich, dass ein jeweiliger des einen Überstands oder der mehreren Überstände, der zwischen zwei benachbarten Gewindegängen angeordnet ist, eine Erstreckungsrichtung senkrecht zu diesen beiden angrenzenden Gewindegängen hat. Gemäß einem solchen Ausführungsbeispiel können sowohl diese Gewindegänge als auch der zugehörige Überstand schräg zur Schraubenachse verlaufend angeordnet sein. Es hat sich herausgestellt, dass eine solche Konfiguration hinsichtlich der Krafteinleitung von der Holzschraube in den Untergrund vorteilhaft ist.

Gemäß einem exemplarischen Ausführungsbeispiel kann zumindest einer der Gewindegänge im Bereich der Schraubenspitze, insbesondere im Bereich eines vordersten Gewindegangs an der Schraubenspitze, mindestens eine Kerbe, insbesondere mehrere in Umfangsrichtung zueinander versetzte Kerben, aufweisen. Zum Beispiel können an dem vordersten Gewindegang an der Schraubenspitze in Umfangsrichtung drei solche Kerben (zum Beispiel in einem Winkelabstand von jeweils 120° zueinander) in Form von radialen Einbuchtungen gebildet werden. Solche Kerben können mit Vorteil dazu beitragen, beim Beginn des Setzvorgangs den Untergrund (insbesondere aus Holz) mechanisch zu schwächen und dadurch für das Setzen des Schraubenrests vorzubereiten. Im Übergangsbereich zwischen einer jeweiligen Kerbe und dem sich anschließenden Abschnitt des zugeordneten Gewindegangs bildet sich eine scharfe Kante bzw. ein Zahn, der sich in das Holzmaterial hineinarbeiten kann. Um das Holzmaterial nicht über Gebühr zu schwächen, kann eine Kerbe oder können Kerben nur im vordersten bzw. der Schraubenspitze nächsten Gewindegang gebildet sein.

Im Folgenden werden exemplarische Ausführungsbeispiele der vorliegenden Erfindung mit Verweis auf die folgenden Figuren detailliert beschrieben.
Figur 1 zeigt eine Holzschraube gemäß einem nicht zur Erfindung gehörenden Vergleichsbeispiel in einer Vorderansicht.
Figur 2 zeigt die Holzschraube gemäß Figur 1 in einer Seitenansicht.
Figur 3 zeigt die Holzschraube gemäß Figur 1 in einer Querschnittsansicht entlang einer Schnittebene A-A gemäß Figur 2.
Figur 4 zeigt die Holzschraube gemäß Figur 1 in einer oberseitigen Ansicht.
Figur 5 zeigt ein Detail B der Holzschraube gemäß Figur 1, vergleiche Figur 3.
Figur 6 zeigt die Holzschraube gemäß Figur 1 in einer unterseitigen Ansicht.
Figur 7 bis Figur 11 zeigen Details von bogenförmigen Überständen in Zwischengewindeabschnitten zwischen benachbarten Gewindegängen von Holzschrauben gemäß exemplarischen Ausführungsbeispielen der Erfindung.
Figur 12 zeigt schematisch einen Abschnitt einer Holzschraube gemäß einem exemplarischen Ausführungsbeispiel, bei der mehrere bogenförmige Überstände untereinander mit einem jeweils gleichen tangentialen Winkelabstand von 90° zueinander versetzt sind.
Figur 13 zeigt eine Holzschraube gemäß einem nicht zur Erfindung gehörenden Vergleichsbeispiel nach Eindrehen in einen Holzuntergrund.
Figur 14 zeigt eine Seitenansicht von einem Schaftabschnitt einer Holzschraube gemäß einem anderen exemplarischen Ausführungsbeispiel der Erfindung.
Figur 15 zeigt eine andere Seitenansicht des Schaftabschnitts gemäß Figur 14.
Figur 16 zeigt eine vergrößerte Ansicht eines schraubenspitzenseitigen Endbereichs des Schaftabschnitt gemäß Figur 14 und Figur 15.
Figur 17 zeigt eine Querschnittansicht entsprechend einer Schnittlinie A-A gemäß Figur 16.
Figur 18 zeigt eine Querschnittansicht entsprechend einer Schnittlinie B-B gemäß Figur 15.
Figur 19 zeigt eine Querschnittansicht entsprechend einer Schnittlinie C-C gemäß Figur 16.
Figur 20 zeigt eine Querschnittansicht entsprechend einer Schnittlinie G-G gemäß Figur 15.
Figur 21 zeigt eine Querschnittansicht entsprechend einer Schnittlinie D-D gemäß Figur 14.
Figur 22 zeigt die Holzschraube gemäß Figur 14 bis Figur 21 ohne Darstellung von Überständen (d.h. die Überstände sind in Figur 22 ausgeblendet).
Figur 23 zeigt eine dreidimensionale Ansicht des Schaftabschnitts gemäß Figur 14 bis Figur 22.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden:
Gemäß einem exemplarischen Ausführungsbeispiel der Erfindung wird ein vorzugsweise als Fräser ausgebildeter Überstand an einem Schaft, einer Schraubenspitze, einem oder mehreren Gewindegängen und/oder einem Übergang zwischen mindestens zwei der genannten Elemente bogenförmig zwischen zwei benachbarten Gewindegängen ausgebildet. Die Enden des vorzugsweise als Fräser ausgebildeten bogenförmigen Überstands können auf einer benachbarten Gewindeflanke enden oder dort enden, wo die Gewindeflanke auf den Schaft trifft. Es ist auch möglich, dass der bogenförmige Überstand mit Abstand zu der benachbarten Gewindeflanke endet. Somit verbleibt zwischen der maximalen Höhe des bogenförmigen Überstands (insbesondere Fräsers) und der benachbarten Gewindeflanke ein Tal (bevorzugt in axialer Richtung) stehen, zwischen dem das Holz (oder ein anderes Material eines Untergrunds, in das die Holzschraube eingebracht wird) beim Einschrauben der Holzschraube nicht oder nur äußerst geringfügig beeinflusst wird. Beim Einschrauben der Holzschraube in Holz oder ein anderes Untergrundmaterial bleibt zwischen dem vorzugsweise als Fräser ausgebildeten bogenförmigen Überstand und den Gewindegängen in axialer Richtung Holz bzw. ein anderes Material zurück, das weder vom bogenförmigen Überstand noch vom Gewinde erfasst wird. Wird an der gesetzten Holzschraube gezogen (zum Beispiel im Rahmen eines Auszugsversuchs), werden die dabei eingeleiteten Kräfte über die Gewindeflanken ins Holz oder das andere Material des Untergrunds übertragen. Dadurch, dass beim Einschrauben der Holzschraube der bogenförmige Überstand das Holz bzw. das andere Untergrundmaterial in der Nähe der Gewindeflanken nahezu unbeeinträchtigt lässt, bleibt das tragende Holz oder das andere Untergrundmaterial nahezu unbeeinträchtigt stehen, was zu erhöhten Auszugskräften führt. Der insbesondere als Fräser ausgebildete bogenförmige Überstand reduziert das Einschraubmoment der Holzschraube und den radialen Verdrängungsdruck des Holzes oder anderen Materials auf den Gewindekern. Dies wird durch eine Fräswirkung eines als Fräser ausgebildeten bogenförmigen Überstands besonders stark gefördert.

Die größte Spaltwirkung beim Einbringen der Holzschraube in einen insbesondere aus Holz gebildeten Untergrund tritt an den Gewindeflankenspitzen auf. Dies erfolgt unabhängig davon, ob der vorteilhaft als Fräser ausgebildete bogenförmige Überstand in axialer Richtung auf der Gewindeflanke endet oder nicht. In dem Fall, in dem der bogenförmige Überstand jedoch mit Abstand zu der Gewindeflanke endet, verbleibt mehr Holz oder anderes Material im radial unteren Bereich der Gewindeflanke (d.h. am schaftnächsten Bereich), was zur Erhöhung der Auszugskraft führt.

Mittig zwischen zwei benachbarten Gewindeflanken tritt in einem Gewindekern der Gewindegänge eine große Spaltwirkung auf. Dies erfolgt insbesondere unabhängig davon, ob ein mit Vorteil als Fräser ausgebildeter bogenförmiger Überstand vorhanden ist oder nicht. Dadurch, dass der bogenförmige Überstand seine maximale radiale Höhe mittig zwischen den benachbarten Gewindeflanken haben kann, reduziert er die Spaltwirkung dort maximal, wo sie auch am größten ist.

Eine Holzschraube gemäß einem exemplarischen Ausführungsbeispiel der Erfindung kann eine kegelförmige Spitze, einen Schaft mit einem Gewinde (gebildet mittels der Gewindegänge) und einen Schraubenkopf mit einem Antrieb aufweisen. Ein als Fräser ausgebildeter bogenförmiger Überstand einer Holzschraube gemäß einem exemplarischen Ausführungsbeispiel der Erfindung verläuft vorzugsweise halbmondförmig zwischen zwei benachbarten Gewindeflanken. Seine radiale Höhe kann mittig zwischen den benachbarten Gewindeflanken am höchsten sein und von dort zu seinen beiden Enden hin abfallen. Der vorzugsweise als Fräser ausgebildete bogenförmige Überstand ist bevorzugt symmetrisch zu dieser maximalen Höhe ausgebildet. Die Enden der bogenförmigen Überstände können mit Abstand zu den benachbarten Gewindeflanken enden.

Der Querschnitt des bevorzugt als Fräser ausgebildeten bogenförmigen Überstand kann dreieckförmig, quadratisch, rechteckförmig oder trapezförmig sein, wobei Mischformen möglich sind. Kanten des bogenförmigen Überstands können entlang ihres Höhenverlaufs rund gestaltet sein oder scharfkantig gestaltet sein. Im ersten Fall wirkt der bogenförmige Überstand eher verdrängend. Im zweiten Fall wirkt der bogenförmige Überstand eher als Fräser, d.h. schneidend. Mischformen aus den beiden genannten Ausführungsformen sind möglich, zum Beispiel ein bogenförmiger Überstand mit einem Fräskantenabschnitt und einem Stumpfkantenabschnitt. Mindestens ein vorzugsweise als Fräser ausgebildeter bogenförmiger Überstand kann nur im Bereich einer kegelförmigen Schraubenspitze angeordnet sein oder kann nur im Schaftabschnitt angeordnet sein. Es ist auch möglich, dass ein solcher bogenförmiger Überstand sowohl in der kegelförmigen Spitze als auch im Schaftabschnitt angeordnet ist. Dies gilt für "Verdränger" analog.

Bogenförmige Überstände einer Holzschraube gemäß einem exemplarischen Ausführungsbeispiel der Erfindung können zueinander winkelversetzt angeordnet sein. Zum Beispiel können die bogenförmigen Überstände (insbesondere ausgebildet als Fräser) untereinander einen gleichen Winkelabstand aufweisen.

Die Enden der bogenförmigen Überstände enden gemäß einem exemplarischen Ausführungsbeispiel mit Abstand zu den Gewindeflanken. Es ist auch möglich, dass ein oder mehrere bogenförmige Überstände gemäß einem exemplarischen Ausführungsbeispiel der Erfindung dort enden, wo die Gewindeflanken auf den Gewindekern treffen, oder auf den Gewindeflanken. Mischformen aus zwei oder drei der zuvor genannten drei Reinformen sind möglich. Die insbesondere als Fräser ausgebildeten bogenförmigen Überstände sind bevorzugt spiegelsymmetrisch konfiguriert. Dies bedeutet, dass der von der höchsten radialen Erstreckung in Richtung Schraubenspitze verlaufende Endabschnitt genauso wie der von dort in Richtung Schraubenkopf verlaufende andere Endabschnitt ausgebildet sein kann. Es ist jedoch in einem anderen Ausführungsbeispiel möglich, dass der Verlauf nicht spiegelsymmetrisch ist. Beispielsweise kann die maximale radiale Höhe schraubenspitzenseitig oder schraubenkopfseitig verschoben sein.

**Figur 1** zeigt eine Holzschraube 100 gemäß einem nicht zur Erfindung gehörenden Vergleichsbeispiel in einer Vorderansicht. **Figur 2** zeigt die Holzschraube 100 gemäß Figur 1 in einer Seitenansicht. **Figur 3** zeigt die Holzschraube 100 gemäß Figur 1 in einer Querschnittsansicht entlang einer in Figur 2 definierten Schnittebene A-A. **Figur 4** zeigt die Holzschraube 100 gemäß Figur 1 in einer oberseitigen Ansicht. **Figur 5** zeigt ein Detail B (vergleiche Figur 3) der Holzschraube 100 gemäß Figur 1. **Figur 6** zeigt die Holzschraube 100 gemäß Figur 1 in einer unterseitigen Ansicht.

Die in Figur 1 dargestellte Holzschraube 100 ist als Holzschraube ausgebildet und aus Stahl, einem anderen Metall oder Kunststoff hergestellt. Genauer gesagt ist die Holzschraube 100 als Holzschraube zum vorbohrungsfreien und selbstschneidenden bzw. gewindefurchenden Einbringen in einen Holzuntergrund 124 (siehe Figur 13) vorgesehen und ausgebildet. Die Holzschraube 100 weist einen Schraubenkopf 132, einen gewindefreien Bolzenabschnitt 144, einen kreiszylindrischen Schaft 102, eine kegelförmige Schraubenspitze 104 und helikale Gewindegänge 106 auf. Die Gewindegänge 106 erstrecken sich radial über Schaft 102 bzw. Schraubenspitze 104 hervorstehend und schraubenförmig umlaufend auf einem Teil des Schafts 102 bis hinein in die Schraubenspitze 104. Stetig gekrümmte kuppenförmige oder bogenförmige Überstände 108 sind in einigen Axialbereichen der Holzschraube 100 zwischen zwei jeweils benachbarten Gewindegängen 106 gebildet.

Wie Figur 1 und Figur 2 zu entnehmen ist, ist eine maximale Radialerstreckung r (vergleiche Figur 7) der bogenförmigen Überstände 108 kleiner als eine maximale Radialerstreckung R (vergleiche Figur 7) der Gewindegänge 106, was ein kraftarmes Setzen der Holzschraube 100 und ein ungestörtes Gewindeschneiden fördert. Von dem Schraubenkopf 132 abgesehen bilden daher die Gewindegänge 106, gefolgt von dem optionalen gewindefreien Bolzenabschnitt 144 und den bogenförmigen Überständen 108, die radial sich am weitesten nach außen erstreckenden Abschnitte der Holzschraube 100. Ferner verlaufen die Überstände 108 in Axialrichtung 110 bogenförmig, d.h. in einer Richtung parallel zu einer Schraubenachse bzw. einer Zentralachse oder Symmetrieachse 140 des kreiszylindrischen Schafts 102. Ein jeweiliges Ende 112, 114 (vergleiche Figur 7) von zwei einander axial gegenüberliegenden Enden 112, 114 der bogenförmigen Überstände 108 endet an einem jeweiligen stufenartigen Übergang bzw. einer Knickstelle 118 zwischen einem Gewindegang 106 und dem Schaft 102. Ferner haben die bogenförmigen Überstände 108 ihre jeweilige maximale Radialerstreckung r axial genau mittig zwischen zwei jeweils benachbarten der Gewindegänge 106. Darüber hinaus haben die bogenförmigen Überstände 108 eine Halbmondform. Mit Vorteil sind in dem gezeigten Vergleichsbeispiel die bogenförmigen Überstände 108 als scharfkantige Fräser ausgebildet.

Einige der bogenförmigen Überstände 108 sind vollständig im Bereich des Schafts 102 ausgebildet. Andere der bogenförmigen Überstände 108 sind vollständig im Bereich der Schraubenspitze 104 ausgebildet. Weitere bogenförmige Überstände 108 erstrecken sich in einem Übergangsbereich zwischen dem Schaft 102 und der Schraubenspitze 104 unter Überbrückung derselben, d.h. haben einen schaftbezogenen Abschnitt und einen schraubenspitzenbezogenen Abschnitt. Jeweilige Gruppen der bogenförmigen Überstände 108 sind miteinander in Axialrichtung 110 fluchtend ausgebildet bzw. sind axial zueinander ausgerichtet. Überstände 108 unterschiedlicher Gruppen sind zueinander tangential winkelversetzt. Genauer gesagt sind bei dem Vergleichsbeispiel gemäß Figur 1 bis Figur 6 mehrere in Axialrichtung 110 fluchtende bogenförmige Überstände 108 im Bereich der Schraubenspitze 104 und mehrere ebenfalls in Axialrichtung 110 fluchtende bogenförmige Überstände 108 in einem schraubenkopfseitigen Endabschnitt 122 der Gewindegänge 106 des Schafts 102 vorgesehen.

Die bogenförmigen Überstände 108 der Holzschraube 100 sind als Fräser ausgebildet und unterstützen somit das kraftarme Eindrehen der Holzschraube 100 in einen Holzuntergrund 124. Sie vermindern außerdem die Neigung des Holzes, unter dem Einfluss der Gewindegänge 106 gespalten zu werden und erhöhen darüber hinaus die Auszugskraft der Holzschraube 100 nach dem Setzen in einen Holzuntergrund 124. Auch verdrängen die bogenförmigen Überstände 108 Holz in gebildete Hinterschnitte 138 (siehe Figur 7 bis Figur 11) zwischen den bogenförmigen Überständen 108 und den dazu benachbarten Gewindegängen 106 und erhöhen dadurch weiter die Auszugskraft der Holzschraube 100.

Gemäß Figur 1 bis Figur 6 ist die Schraubenspitze 104 kegelförmig ausgebildet und endet in einem Schraubenspitzenendpunkt 134. Wird die Holzschraube 100 mit dem Schraubenspitzenendpunkt 134 auf einen Holzuntergrund 124 aufgesetzt und mittels eines Antriebswerkzeugs (zum Beispiel eines Schraubendrehers oder eines Akkuschraubers, nicht gezeigt) in Rotation versetzt, so dringt zunächst der Schraubenspitzenendpunkt 134 in das Holz ein, wodurch die sich bis in die Schraubenspitze 104 hinein erstreckenden Gewindegänge 106 greifen und sich selbstschneidend bzw. selbstfurchend drehend in den Holzuntergrund 124 vorgraben. Die als Fräser ausgebildeten bogenförmigen Überstände 108 der Holzschraube 100 gemäß Figur 1 bis Figur 6 schneiden dann mit ihren scharfkantigen Schneidkanten im Bereich des Kamms der bogenförmigen Überstände 108 Holzmaterial ab und verdrängen Holzfasern in Zwischenräume zwischen den bogenförmigen Überständen 108 und den Gewindegängen 106. Das Holz bleibt dabei aber weitgehend intakt. Der Setzvorgang ist beendet, wenn eine Unterseite des Schraubenkopfs 132 an eine Außenseite des Holzuntergrunds 124 anschlägt. Natürlich kann der Einbringvorgang der Holzschraube 100 in den Holzuntergrund 124 aber auch bereits zuvor beendet werden. Ferner ist es möglich, ein weiteres Element, wie zum Beispiel eine Beilagscheibe, zwischen den Schraubenkopf 132 und den Holzuntergrund 124 zwischenzuordnen. Figur 1 zeigt auch glatte und von bogenförmigen Überständen 108 freie Zwischengewindeabschnitte 126 des hier kreiszylindrischen Schafts 102 zwischen benachbarten Gewindegängen 106. In anderen Zwischengewindeabschnitten 126 sind an den beschriebenen Stellen die axial verlaufenden halbmondförmigen bogenförmigen Überstände 108 einstückig an die Holzschraube 100 angeformt. Da sich die einander gegenüberliegenden Enden 112, 114 oder Ausläufer der bogenförmigen Überstände 108 bis zu den Flanken der benachbarten Gewindegänge 106 erstrecken, bilden sich freie Bereiche zwischen Gewindegang 106 und Überstand 108 in Form von Hinterschnitten 138. Diese Bereiche füllen sich während des Einbringens der Holzschraube 100 mit Holzfasern und hemmen dadurch zusätzlich ein Herausziehen der Holzschraube 100 aus dem Holzuntergrund 124 durch einen dadurch vermittelten Formschluss, Reibschluss bzw. Kraftschluss.

Wie in Figur 4 gezeigt, hat der Schraubenkopf 132 einen Zentralbereich 136 einer Stirnfläche, der einen in der Figur nicht dargestellten Antrieb (zum Beispiel einen Längsschlitz, einen Kreuzschlitz, einen Sechskant, einen AW-Antrieb, etc.) aufweisen kann. Dies ermöglicht es einem in der Figur ebenfalls nicht dargestellten Antriebswerkzeug, kraftschlüssig in den Schraubenkopf 132 einzugreifen und dadurch ein Drehmoment von dem Antriebswerkzeug auf die Holzschraube 100 zu übertragen.

Figur 7 bis Figur 11 zeigen Details von bogenförmigen Überständen 108 in Zwischengewindeabschnitten 126 zwischen benachbarten Gewindegängen 106 einer Holzschraube 100 gemäß exemplarischen Ausführungsbeispielen der Erfindung.

Gemäß **Figur 7** enden die beiden einander axial gegenüberliegenden Enden 112, 114 des dargestellten bogenförmigen Überstands 108 an dem Schaft 102 mit axialem Abstand zu einem angrenzenden Gewindegang 106. Somit endet der Überstand 108 gemäß Figur 7 beidseitig im Bereich des Schafts 102. Der gezeigte bogenförmige Überstand 108 verläuft darüber hinaus ausgehend von einer Position mit maximaler Radialerstreckung r symmetrisch in Richtung von den zwei unmittelbar benachbarten Gewindegängen 106. Wie in Figur 7 gezeigt, ist im Querschnitt der bogenförmige Abschnitt 108 radial gegenüber den Gewindegängen 106 zurückversetzt. Dies bewirkt, dass das Selbstschneiden eines zu den Gewindegängen 106 inversen helikalen Gegengewindes in dem Holzuntergrund 124 durch den bogenförmigen Überstand 108 nicht gestört wird (r<R). Zwischen dem bogenförmigen Überstand 108 einerseits und den zwei daran angrenzenden Gewindegängen 106 ist ein jeweiliger Hinterschnitt 138 zum Aufnehmen von Material eines Holzuntergrunds 124 (siehe Figur 13) gebildet, in den die Holzschraube 100 eingebracht ist. Die Hinterschnitte 138 zwischen dem bogenförmigen Überstand 108 und den angrenzenden Gewindegängen 106 füllen sich beim Eintreiben der Holzschraube 100 in einen Holzuntergrund 124 mit komprimierten Holzfasern. Wie ebenfalls in Figur 7 dargestellt, haben die Gewindegänge 106 im Querschnitt eine im Wesentlichen dreieckförmige Gestalt. Der Überstand 108 hat dagegen die Form einer Kuppel bzw. eines Halbmonds.

Im Unterschied zu Figur 7 ist gemäß **Figur 8** der bogenförmige Überstand 108 so ausgebildet, dass er sich bis zu einer Kante zwischen der zylindrischen Mantelfläche des Schafts 102 und der hin zu dem Schaft 102 abfallenden Flanke der Gewindegänge 106 erstreckt. Dies führt zu einem besonders tief ausgeprägten Hinterschnitt 138 und somit zu einem starken Formschluss zwischen der Holzschraube 100 und dem verdrängten Holzmaterial.

Gemäß **Figur 9** enden beide einander axial gegenüberliegenden Enden 112, 114 des dargestellten bogenförmigen Überstands 108 auf einer Flanke 116 eines jeweiligen der Gewindegänge 106, d.h. erstrecken sich an den freiliegenden Enden 112, 114 radial nicht bis hin zu dem Schaft 102. Gemäß Figur 9 ist der Hinterschnitt 138 weniger stark ausgeprägt. Allerdings führt die geringere konvexe Krümmung des bogenförmigen Überstands 108 gemäß Figur 9 dazu, dass die Eintreibkraft der Holzschraube 100 in den Holzuntergrund 124 weiter verringert wird.

Die Ausführungsbeispiele gemäß Figur 7 bis Figur 9 zeigen allesamt eine spiegelsymmetrische Konfiguration des bogenförmigen Überstands 108 in Bezug auf eine Symmetrieachse 140. Diese strukturelle Symmetrie führt zu einer symmetrischen Krafteinleitung in die Holzschraube 100 und in der Folge zu einer Vermeidung von Kraftspitzen.

Gemäß **Figur 10** verläuft der gezeigte bogenförmige Überstand 108 ausgehend von einer Position mit maximaler Radialerstreckung r in axialer (d.h. gemäß Figur 10 horizontaler) Richtung asymmetrisch in Richtung von zwei benachbarten Gewindegängen 106 hin zu den Enden 112, 114. Somit ist gemäß Figur 10 die Materialverteilung in dem bogenförmigen Überstand 108 zwischen den benachbarten Gewindegängen 106 asymmetrisch und hier schwerpunktmäßig nach links verschoben. Anders ausgedrückt ist die Position maximaler Radialerstreckung (r) des bogenförmigen Überstands 108 gemäß Figur 10 näher bei dem einen benachbarten Gewindegang 106 als bei dem anderen benachbarten Gewindegang 106. Dadurch kann ein schmaler tiefer und ein breiter seichter Hinterschnitt 138 erreicht werden, wobei durch diese asymmetrische Konfiguration die Auszugskraft weiter erhöht werden kann.

Gemäß **Figur 11** verläuft der gezeigte bogenförmige Überstand 108 ausgehend von einer Position mit maximaler Radialerstreckung r ebenfalls asymmetrisch in Richtung von zwei benachbarten Gewindegängen 106. Figur 11 zeigt ein Ausführungsbeispiel ähnlich Figur 10, wobei gemäß Figur 11 die asymmetrische Materialverteilung des bogenförmigen Überstands 108 nach rechts statt nach links verschoben ist, d.h. weg von Ende 112 und hin zu Ende 114.

**Figur 12** zeigt stark schematisiert einen Abschnitt einer Holzschraube 100 gemäß einem exemplarischen Ausführungsbeispiel, bei der mehrere bogenförmige Überstände 108 gegeneinander mit einem jeweils gleichen tangentialen Winkelabstand von hier 90° versetzt sind. Figur 12 zeigt eine Art Draufsicht eines Querschnitts einer Holzschraube 100 gemäß einem exemplarischen Ausführungsbeispiel der Erfindung und veranschaulicht, dass in diesem Fall vier winkelsymmetrisch verteilte bogenförmige Überstände 108 an dem Schaft 102 angeformt sind. Der relative Winkelabstand zweier benachbarter bogenförmiger Überstände 108 beträgt gemäß diesem Ausführungsbeispiel 90°. Dies führt zu einem in Tangentialrichtung symmetrischen Krafteintrag in den Holzuntergrund 124 und zu einer zuverlässigen Verankerung.

**Figur 13** zeigt eine Holzschraube 100 gemäß einem nicht zur Erfindung gehörenden Vergleichsbeispiel nach Eindrehen in einen Holzuntergrund 124. Genauer gesagt zeigt Figur 13 das Ergebnis des Eintreibens einer Holzschraube 100, wie der in Figur 1 bis Figur 6 gezeigten, in den Holzuntergrund 124 aus Massivholz. Schematisch ist in einem Detail 148 dargestellt, wie sich Holzfasern 142 im Bereich der bogenförmigen Überstände 108 akkumulieren bzw. dort gedrängt oder komprimiert werden. Dies erhöht die Auszugskraft, ohne das Holzmaterial des Holzuntergrunds 124 übermäßig zu schädigen. Eine optionale Beilagscheibe 150 ist ebenfalls dargestellt.

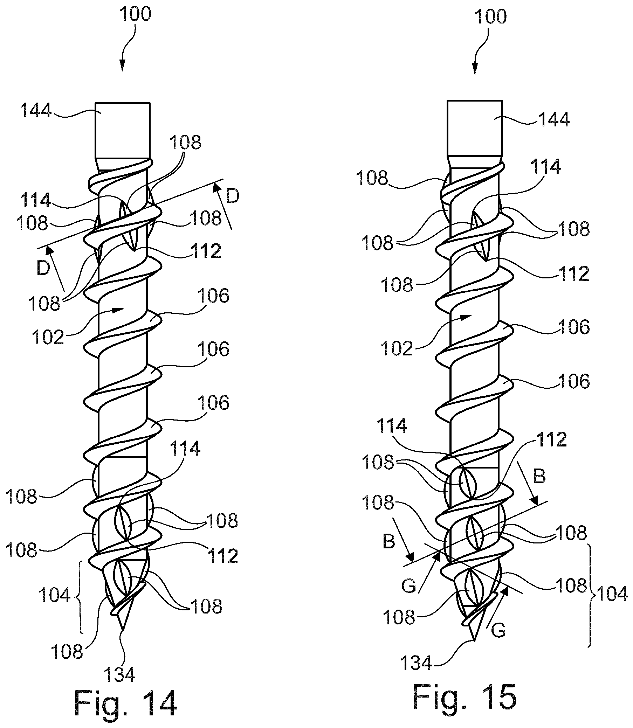

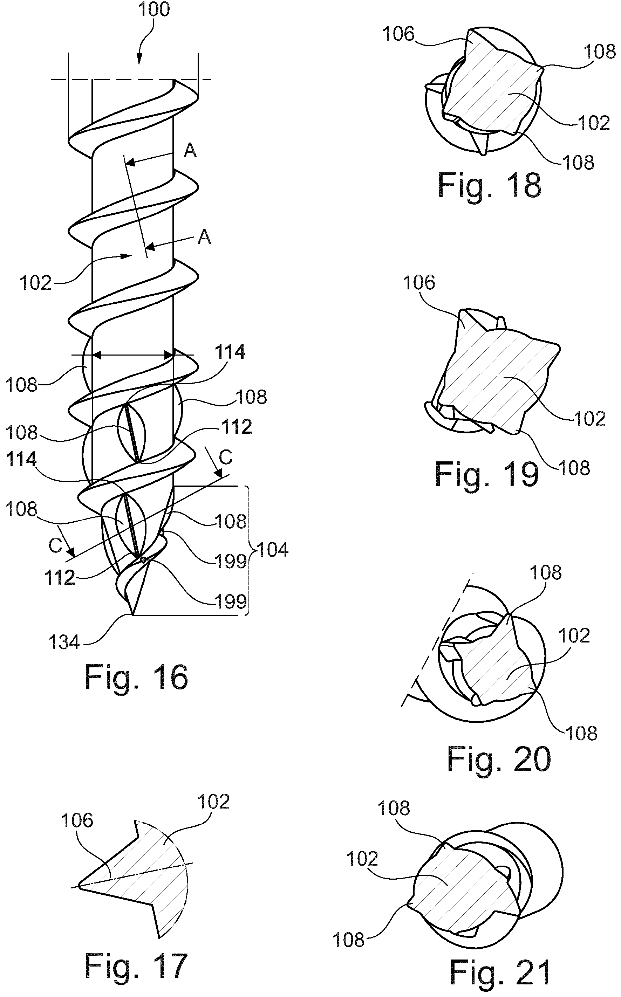

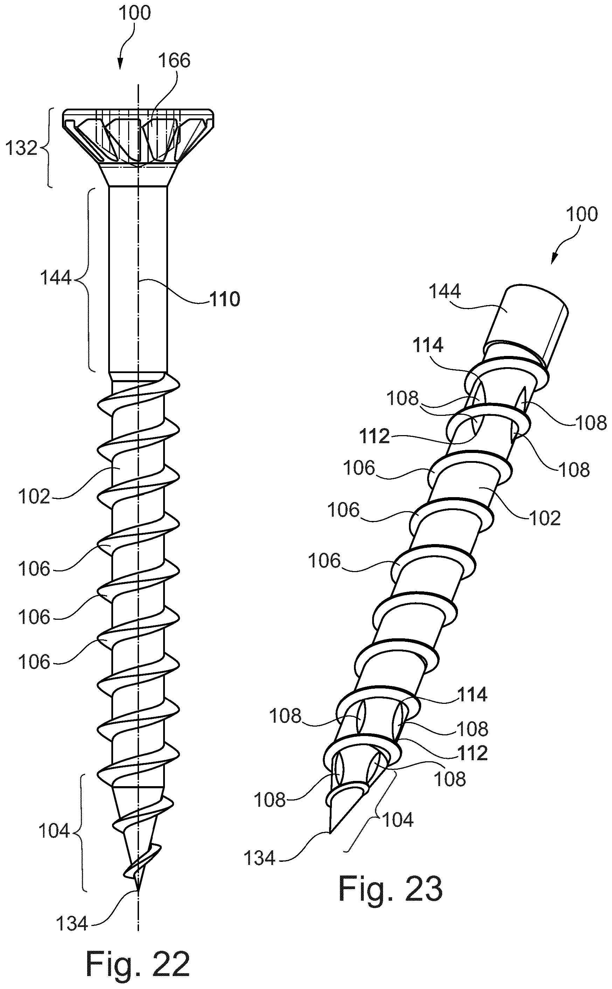

**Figur 14** zeigt eine Seitenansicht von einem Schaftabschnitt einer Holzschraube 100 gemäß einem anderen exemplarischen Ausführungsbeispiel der Erfindung. **Figur 15** zeigt eine andere Seitenansicht des Schaftabschnitts gemäß Figur 14. **Figur 16** zeigt eine vergrößerte Ansicht eines schraubenspitzenseitigen Endbereichs des Schaftabschnitts gemäß Figur 14 und Figur 15. **Figur 17** zeigt eine Querschnittansicht entsprechend einer Schnittlinie A-A gemäß Figur 16. **Figur 18** zeigt eine Querschnittansicht entsprechend einer Schnittlinie B-B gemäß Figur 15. **Figur 19** zeigt eine Querschnittansicht entsprechend einer Schnittlinie C-C gemäß Figur 16. **Figur 20** zeigt eine Querschnittansicht entsprechend einer Schnittlinie G-G gemäß Figur 15. **Figur 21** zeigt eine Querschnittansicht entsprechend einer Schnittlinie D-D gemäß Figur 14. **Figur 22** zeigt die Holzschraube 100 gemäß Figur 14 bis Figur 21 ohne Darstellung von Überständen 108. **Figur 23** zeigt eine dreidimensionale Ansicht des Schaftabschnitts gemäß Figur 14 bis Figur 22.

Die in Figur 14 bis Figur 23 dargestellte Holzschraube 100 ist ebenfalls zum vorbohrungsfreien und selbstschneidenden bzw. gewindefurchenden Einbringen in einen Holzuntergrund ausgebildet. Die Holzschraube 100 weist einen Schraubenkopf 132 mit einem Antrieb 166 (vergleiche Figur 22), einen optionalen gewindefreien Bolzenabschnitt 144, einen kreiszylindrischen Schaft 102, eine kegelförmige Schraubenspitze 104 und helikale Gewindegänge 106 auf. Die Gewindegänge 106 erstrecken sich von einem Schraubenspitzenendpunkt 134 ausgehend über den Schaft 102 hinweg und enden in dem dargestellten Ausführungsbeispiel an dem optionalen gewindefreien Bolzenabschnitt 144 oder reichen alternativ bis zum Schraubenkopf 132 (nicht gezeigt). Der Schraubenkopf 132 hat den in Figur 22 dargestellten Antrieb 166. Dies ermöglicht es einem nicht dargestellten Antriebswerkzeug, formschlüssig in den Schraubenkopf 132 einzugreifen und dadurch ein Drehmoment von dem Antriebswerkzeug auf die Holzschraube 100 zu übertragen. Die Schraubenspitze 104 ist kegelförmig ausgebildet und endet in dem punktförmigen Schraubenspitzenendpunkt 134. Die Gewindegänge 106 erstrecken sich radial über Schaft 102 bzw. Schraubenspitze 104 hervorstehend und schraubenförmig umlaufend auf einem Teil des Schafts 102 bis hinein in die Schraubenspitze 104.

Stetig gekrümmte kuppenförmige, bogenförmige bzw. halbmondförmige Überstände 108 sind in einigen Axialbereichen der Holzschraube 100 zwischen zwei jeweils benachbarten Gewindegängen 106 gebildet und gegenüber einer axialen Richtung 110 der Holzschraube 100 um einen spitzen Winkel (zum Beispiel in einen Bereich zwischen 5° und 40°) verkippt. Diese Überstände 108 befinden sich im Bereich der Schraubenspitze 104 und in einem daran angrenzenden Bereich des Schafts 102. Ein jeweiliges Ende 112, 114 von zwei einander axial gegenüberliegenden Enden 112, 114 dieser bogenförmigen Überstände 108 endet an einer Knickstelle bzw. an einem Übergang zwischen einem Gewindegang 106 und dem Schaft 102. Ferner haben diese bogenförmigen Überstände 108 ihre jeweilige maximale Radialerstreckung axial etwa mittig zwischen zwei jeweils benachbarten der Gewindegänge 106.

Andere solche zum Beispiel halbmondförmigen Überstände 108 erstrecken sich über einen Gewindegang 106 hinweg, d.h. kreuzen diesen. Letztere Überstände 108 sind in dem dargestellten Ausführungsbeispiel in einem Bereich des Schafts 102 gebildet, an den sich der gewindefreie Bolzenabschnitt 144 anschließt. Diese bogenförmigen Überstände 108 haben ihre jeweilige maximale Radialerstreckung im Bereich eines jeweiligen Maximums des jeweiligen Gewindegangs 106.

Eine maximale Radialerstreckung beider Typen von Überständen 108 (d.h. jene zwischen Gewindegängen 106 und jene, die einen Gewindegang 106 in axialer Richtung kreuzen) ist kleiner als eine maximale Radialerstreckung der Gewindegänge 106. Von dem Schraubenkopf 132 abgesehen bilden daher die Gewindegänge 106 die radial sich am weitesten nach außen erstreckenden Abschnitte der Holzschraube 100.

Ferner verlaufen in dem dargestellten Ausführungsbeispiel alle Überstände 108 in einem spitzen Winkel zu einer Axialrichtung 110 bogenförmig, d.h. sind gegenüber der Axialrichtung 110 verkippt. Alternativ können die Überstände 108, die zwischen Gewindegängen 106 angeordnet sind und/oder die Überstände 108, welche die Gewindegänge 106 kreuzen, aber auch entlang der Axialrichtung 110 verlaufend angeordnet werden. Insbesondere kann ein Überstand 108 zwischen Gewindegängen 106 senkrecht zu diesen Gewindegängen 106 verlaufend angeordnet sein. Alternativ oder ergänzend kann ein weiterer Überstand 108, der einen Gewindegang 106 kreuzt, senkrecht zu diesem Gewindegang 106 verlaufend angeordnet sein. Es ist auch möglich, dass die zwischen Gewindegängen 106 angeordneten Überstände 108 und die einen Gewindegang 106 kreuzenden weiteren Überstände 108 zueinander parallel verlaufend angeordnet sind.

Die zwischen Gewindegängen 106 verlaufenden und die Gewindegänge 106 kreuzenden bogenförmigen Überstände 108 sind gemäß dem beschriebenen Ausführungsbeispiel als Fräser ausgebildet und unterstützen bzw. erleichtern somit das Eindrehen der Holzschraube 100 in einen Holzuntergrund.

Die die Gewindegänge 106 kreuzenden bogenförmigen weiteren Überstände 108 können dazu beitragen, beim Einbringen der Holzschraube 100 in einen Holz aufweisenden oder aus Holz bestehenden Untergrund Holzfasern zu verdrängen, um ein Aufweiten des Bohrlochs an seiner Außenseite zu fördern. Diese weiteren Überstände 108 in einem Übergangsbereich zwischen dem Schaftabschnitt mit den Gewindegängen 106 und dem gewindefreien Bolzenabschnitt 144 (der, wie in Figur 14 und Figur 15 gezeigt, einen etwas größeren Außendurchmesser haben kann als der Schaftabschnitt mit den Gewindegängen 106) können ein Spreizen des Holzes unterdrücken, wenn der gewindefreie Bolzenabschnitt 144 in den Holzuntergrund eindringt. Auf diese Weise können die weiteren Überstände 108 das Loch am Übergang zwischen dem gewindefreien Bolzenabschnitt 144 und dem Schaftabschnitt mit den Gewindegängen 106 vorbereiten. Sie vermindern außerdem die Neigung des Holzes, unter dem Einfluss der Gewindegänge 106 gespalten zu werden.

Auch verdrängen die bogenförmigen Überstände 108 Holz in gebildete Hinterschnitte (vergleiche Bezugszeichen 138 im Figur 7 bis Figur 11) zwischen den bogenförmigen Überständen 108 und den dazu benachbarten Gewindegängen 106.

Wird die Holzschraube 100 mit dem Schraubenspitzenendpunkt 134 auf einen Holzuntergrund aufgesetzt und mittels eines Antriebswerkzeugs (zum Beispiel eines Schraubendrehers oder eines Akkuschraubers, nicht gezeigt) in Rotation versetzt, so dringt zunächst der Schraubenspitzenendpunkt 134 in das Holz ein, wodurch die sich bis in die Schraubenspitze 104 hinein erstreckenden Gewindegänge 106 greifen und sich selbstschneidend bzw. selbstfurchend drehend in den Holzuntergrund vorgraben. Die als Fräser ausgebildeten bogenförmigen Überstände 108 der Holzschraube 100 schneiden dann im Bereich des Kamms der bogenförmigen Überstände 108 Holzmaterial ab und verdrängen Holzfasern in Zwischenräume zwischen den bogenförmigen Überständen 108 und den Gewindegängen 106. Das Holz bleibt dabei aber weitgehend intakt.

Wie in Figur 16 dargestellt, sind im Bereich des vordersten Gewindegangs 106 an der Schraubenspitze 104 drei kleine Kerben 199 oder Einbuchtungen gebildet, die zum Beispiel in einem Winkelabstand von 120° zueinander angeordnet werden können. Anschaulich können die Kerben 199 in Form von Einbuchtungen des Gewindegangs 106 Zähne bilden, die zu Beginn des Setzvorgangs der Holzschraube 100 ein Vordringen in den Holzuntergrund fördern.

Ein erster Aspekt der Erfindung betrifft eine Holzschraube 100, aufweisend: einen Schaft 102; eine Schraubenspitze 104; Gewindegänge 106, die umfänglich auf zumindest einem Teil des Schafts 102, bevorzugt bis hinein in die Schraubenspitze 104, verlaufen; mindestens einen bogenförmigen Überstand 108 zwischen zumindest zwei benachbarten der Gewindegänge 106.

Ein zweiter Aspekt der Erfindung betrifft ein Verfahren zum Herstellen einer Holzschraube 100, wobei das Verfahren aufweist: Bilden eines Schafts 102 und einer sich daran axial anschließenden Schraubenspitze 104; Bilden von Gewindegängen 106, die sich umfänglich auf zumindest einen Teil des Schafts 102, bevorzugt bis in die Schraubenspitze 104 hinein, erstrecken; Bilden zumindest eines bogenförmigen Überstands 108 zwischen zumindest zwei benachbarten der Gewindegänge 106 auf dem Schaft 102 und/oder auf der Schraubenspitze 104.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, solange diese Kombinationen unter den Wortlaut der beigefügten Ansprüche fallen. Bezugszeichen in den Ansprüchen sind nicht als Einschränkung anzusehen.

## Patentansprüche

1. Holzschraube (100), aufweisend:
einen Schaft (102);
eine Schraubenspitze (104);
Gewindegänge (106), die umfänglich auf zumindest einem Teil des Schafts (102), bevorzugt bis hinein in die Schraubenspitze (104), verlaufen;
eine erste Gruppe mit mindestens einem bogenförmigen Überstand (108) zwischen zwei benachbarten Gewindegängen (106) und eine zweite Gruppe mit mindestens einem bogenförmigen Überstand (108) zwischen zwei anderen benachbarten Gewindegängen (106), wobei eine Hauptverlaufsrichtung des jeweiligen Überstands (108) in einer Draufsicht auf die Holzschraube (100) gegenüber einer axialen Richtung (110) der Holzschraube (100) im Gegenuhrzeigersinn um einen Winkel zwischen 5° und 40° verkippt ist und alle Überstände (108) so angeordnet sind, dass sie nicht zueinander fluchten.

2. Holzschraube (100) gemäß Anspruch 1, wobei eine maximale Radialerstreckung (r) mindestens eines der bogenförmigen Überstande (108) kleiner als eine maximale Radialerstreckung (R) der Gewindegänge (106) ist.

3. Holzschraube (100) gemäß Anspruch 1 oder 2, wobei sich mindestens einer der bogenförmigen Überstande (108) in einem Winkel von 90° zu den Gewindegängen (106) erstreckt.

4. Holzschraube (100) gemäß einem der Ansprüche 1 bis 3, aufweisend zumindest eines der folgenden Merkmale:
zumindest ein Ende (112) von zwei einander axial gegenüberliegenden Enden (112, 114) von zumindest einem der bogenförmigen Überstande (108) endet auf einer Flanke (116) eines der Gewindegänge (106);
zumindest ein Ende (112) von zwei einander axial gegenüberliegenden Enden (112, 114) von zumindest einem der bogenförmigen Überstande (108) endet an einer Knickstelle (118) zwischen einem Gewindegang (106) und dem Schaft (102);
zumindest ein Ende (112) von zwei einander axial gegenüberliegenden Enden (112, 114) von zumindest einem der bogenförmigen Überstande (108) endet an dem Schaft (102) mit Abstand zu einem angrenzenden Gewindegang (106).

5. Holzschraube (100) gemäß einem der Ansprüche 1 bis 4, wobei zumindest einer der bogenförmigen Überstande (108) seine maximale Radialerstreckung (r) mittig zwischen zwei benachbarten der Gewindegänge (106) hat.

6. Holzschraube (100) gemäß einem der Ansprüche 1 bis 5, wobei die Schraubenspitze (104) kegelförmig ist oder eine Bohrspitze aufweist.

7. Holzschraube (100) gemäß einem der Ansprüche 1 bis 6, aufweisend zumindest eines der folgenden Merkmale:
wobei zumindest einer der bogenförmigen Überstande (108), insbesondere in seiner Haupterstreckungsrichtung und/oder senkrecht zu seiner Haupterstreckungsrichtung, eine Form hat, die aus einer Gruppe ausgewählt ist, die besteht aus einer Halbmondform, einer Halbkreisform und einer Form mit mindestens zwei ineinander übergehenden, insbesondere in axialer Richtung ineinander übergehenden, Abschnitten der zuvor genannten Formen;
wobei zumindest einer der bogenförmigen Überstande (108) ausgehend von einer zentralen Position mit maximaler Radialerstreckung (r) symmetrisch oder asymmetrisch zu einander gegenüberliegenden Enden (112, 114) des Überstands (108) in Richtung von zwei benachbarten Gewindegängen (106), insbesondere aber nicht axial über diese hinausgehend, verläuft;
wobei mindestens einer der bogenförmigen Überstande (108) als scharfkantiger Fräser ausgebildet ist;
wobei mindestens einer der bogenförmigen Überstande (108) stumpfkantig ausgebildet ist;
wobei mindestens einer der bogenförmigen Überstande (108) nur im Bereich des Schafts (102) ausgebildet ist;
wobei mindestens einer der bogenförmigen Überstande (108) nur im Bereich der Schraubenspitze (104) ausgebildet ist;
wobei mindestens einer der bogenförmigen Überstande (108) sich in einem Übergangsbereich zwischen dem Schaft (102) und der Schraubenspitze (104) erstreckt;
wobei mehrere bogenförmige Überstände (108) untereinander mit einem jeweils gleichen tangentialen Winkelabstand zueinander versetzt sind;
wobei zwischen einem jeweiligen bogenförmigen Überstand (108) einerseits und zumindest einem der jeweiligen zwei daran angrenzenden der Gewindegänge (106) ein Hinterschnitt (138) zum Aufnehmen von Material eines Holzuntergrunds (124) gebildet ist, wenn die Holzschraube (100) in den Holzuntergrund (124) eingebracht ist;
ausgebildet zum vorbohrungsfreien Einbringen in einen Holzuntergrund (124).

8. Holzschraube (100) gemäß einem der Ansprüche 1 bis 7, aufweisend mindestens einen weiteren Überstand (108), der sich über einen, insbesondere über genau einen, der Gewindegänge (106) hinweg erstreckt, insbesondere einen der Gewindegänge (106) kreuzt.

9. Holzschraube (100) gemäß Anspruch 8, aufweisend zumindest eines der folgenden Merkmale:
wobei der mindestens eine weitere Überstand (108) bogenförmig, insbesondere halbmondförmig, ist;
aufweisend eine Mehrzahl von sich über einen, insbesondere über genau einen, der Gewindegänge (106) erstreckenden weiteren Überständen (108), die in Tangentialrichtung voneinander beabstandet sind und um den Schaft (102) umlaufend angeordnet sind;
wobei der mindestens eine weitere Überstand (108) in einem Bereich des Schafts (102) gebildet ist, an den sich ein Schraubenkopf (132) oder ein gewindefreier Bolzenabschnitt (144) anschließt;
wobei der mindestens eine weitere Überstand (108) seine maximale Radialerstreckung im Bereich eines jeweiligen Maximums des jeweiligen Gewindegangs (106) hat;
wobei eine maximale Radialerstreckung des mindestens einen weiteren Überstands (108) geringer als eine maximale Radialerstreckung des zugeordneten Gewindegangs (106) ist.

10. Holzschraube (100) gemäß einem der Ansprüche 8 und 9, wobei zumindest einer der Überstande (108) und des mindestens einen weiteren Überstands (108) in einem spitzen Winkel zu einer Axialrichtung (110) des Schafts (102) verlaufend angeordnet ist.

11. Holzschraube (100) gemäß einem der Ansprüche 1 bis 10, aufweisend zumindest eines der folgenden Merkmale:
wobei mindestens einer der Überstande (108) senkrecht zu den beiden benachbarten Gewindegängen (106) verlaufend angeordnet ist, zwischen denen der mindestens eine der Überstande (108) angeordnet ist;
wobei der mindestens eine weitere Überstand (108) senkrecht zu dem Gewindegang (106) verlaufend angeordnet ist, über den sich der mindestens eine weitere Überstand (108) hinweg erstreckt.

12. Holzschraube (100) gemäß einem der Ansprüche 1 bis 11, wobei zumindest einer der Gewindegänge (106) im Bereich der Schraubenspitze (104), insbesondere im Bereich eines vordersten Gewindegangs (106) an der Schraubenspitze (104), mindestens eine Kerbe (199), insbesondere mehrere in Umfangsrichtung zueinander versetzte Kerben (199), aufweist.

13. Verfahren zum Einbringen einer Holzschraube (100) gemäß einem der Ansprüche 1 bis 12 in einen Holzuntergrund (124), wobei das Verfahren aufweist:
Bereitstellen des Holzuntergrunds (124), insbesondere ohne Vorbohrung;
insbesondere vorbohrungsfreies und/oder selbstfurchendes Eindrehen der Holzschraube (100) in den Holzuntergrund (124).

14. Verfahren zum Herstellen einer Holzschraube (100), wobei das Verfahren aufweist:
Bilden eines Schafts (102) und einer sich daran axial anschließenden Schraubenspitze (104);
Bilden von Gewindegängen (106), die sich umfänglich auf zumindest einen Teil des Schafts (102), bevorzugt bis in die Schraubenspitze (104) hinein, erstrecken;
Bilden einer ersten Gruppe mit zumindest einem bogenförmigen Überstand (108) zwischen zumindest zwei benachbarten Gewindegängen (106) und Bilden einer zweiten Gruppe mit mindestens einem bogenförmigen Überstand (108) zwischen zwei anderen benachbarten Gewindegängen (106) auf dem Schaft (102) und/oder auf der Schraubenspitze (104), wobei eine Hauptverlaufsrichtung des jeweiligen Überstands (108) in einer Draufsicht auf die Holzschraube (100) gegenüber einer axialen Richtung (110) der Holzschraube (100) im Gegenuhrzeigersinn um einen Winkel zwischen 5° und 40° verkippt ist und alle Überstände (108) so angeordnet werden, dass sie nicht zueinander fluchten.

15. Verwendung einer Holzschraube (100) gemäß einem der Ansprüche 1 bis 12 zum, insbesondere vorbohrungsfreien und/oder gewindeschneidenden, Einbringen in einen Holzuntergrund (124).

## Claims

1. Wood screw (100) comprising:
a shaft (102);
a screw tip (104);
threads (106) extending circumferentially on at least a portion of the shaft (102), preferably extending into the screw tip (104);
a first group with at least one arcuate projection (108) between two adjacent threads (106) and a second group with at least one arcuate projection (108) between two other adjacent threads (106), wherein a main direction of the respective projection (108) in a top view of the wood screw (100) is tilted counterclockwise by an angle between 5° and 40° relative to an axial direction (110) of the wood screw (100), and all projections (108) are arranged so that they are not aligned with each other.

2. Wood screw (100) according to claim 1, wherein a maximum radial extension (r) of at least one of the arcuate projections (108) is smaller than a maximum radial extension (R) of the threads (106).

3. Wood screw (100) according to claim 1 or 2, wherein at least one of the arcuate projections (108) extends at an angle of 90° to the threads (106).

4. Wood screw (100) according to one of claims 1 to 3, having at least one of the following features:
at least one end (112) of two axially opposite ends (112, 114) of at least one of the arcuate projections (108) ends on a flank (116) of one of the threads (106);
at least one end (112) of two axially opposite ends (112, 114) of at least one of the arcuate projections (108) ends at a bend (118) between a thread (106) and the shaft (102);
at least one end (112) of two axially opposite ends (112, 114) of at least one of the arcuate projections (108) ends on the shaft (102) at a distance from an adjacent thread (106).

5. Wood screw (100) according to one of claims 1 to 4, wherein at least one of the arcuate projections (108) has its maximum radial extension (r) centrally between two adjacent threads (106).

6. Wood screw (100) according to one of claims 1 to 5, wherein the screw tip (104) is conical or has a drill tip.

7. Wood screw (100) according to one of claims 1 to 6, having at least one of the following features:
wherein at least one of the arcuate projections (108), in particular in its main direction of extension and/or perpendicular to its main direction of extension, has a shape selected from a group consisting of a crescent shape, a semicircular shape, and a shape with at least two sections of the aforementioned shapes merging into one another, in particular merging into one another in the axial direction;
wherein at least one of the arcuate projections (108) extends symmetrically or asymmetrically from a central position with maximum radial extension (r) to opposite ends (112, 114) of the projection (108) in the direction of two adjacent threads (106), but in particular not extending axially beyond them;
wherein at least one of the arcuate projections (108) is designed as a sharp-edged cutter;
wherein at least one of the arcuate projections (108) is designed with a blunt edge;
wherein at least one of the arcuate projections (108) is formed only in the region of the shank (102);
wherein at least one of the arcuate projections (108) is formed only in the region of the screw tip (104);
wherein at least one of the arcuate projections (108) extends in a transition region between the shaft (102) and the screw tip (104);
wherein a plurality of arcuate projections (108) are offset from one another by a respective equal tangential angular distance;
wherein an undercut (138) is formed between a respective arcuate projection (108) on the one hand and at least one of the respective two adjacent threads (106) on the other hand, for receiving material from a wooden substrate (124) when the wood screw (100) is inserted into the wooden substrate (124);
designed for insertion into a wooden substrate (124) without pre-drilling.

8. Wood screw (100) according to one of claims 1 to 7, comprising at least one further projection (108) which extends across one, in particular exactly one, of the threads (106), in particular crosses one of the threads (106).

9. Wood screw (100) according to claim 8, having at least one of the following features:
wherein the at least one further projection (108) is arcuate, in particular crescent-shaped;
having a plurality of further projections (108) extending over one, in particular exactly one, of the threads (106), which are spaced apart from each other in the tangential direction and are arranged circumferentially around the shaft (102);
wherein the at least one further projection (108) is formed in a region of the shaft (102) adjoining a screw head (132) or a threadless bolt section (144);
wherein the at least one further projection (108) has its maximum radial extension in the region of a respective maximum of the respective thread pitch (106);
wherein a maximum radial extension of the at least one further protrusion (108) is less than a maximum radial extension of the associated thread pitch (106).

10. Wood screw (100) according to one of claims 8 and 9, wherein at least one of the protrusions (108) and the at least one further protrusion (108) is arranged at an acute angle to an axial direction (110) of the shaft (102).

11. Wood screw (100) according to one of claims 1 to 10, having at least one of the following features:
wherein at least one of the projections (108) is arranged perpendicular to the two adjacent threads (106) between which the at least one of the projections (108) is arranged;
wherein the at least one further protrusion (108) is arranged to extend perpendicularly to the thread (106) over which the at least one further protrusion (108) extends.

12. Wood screw (100) according to one of claims 1 to 11, wherein at least one of the threads (106) in the region of the screw tip (104), in particular in the region of a foremost thread (106) at the screw tip (104), has at least one notch (199), in particular a plurality of notches (199) offset from one another in the circumferential direction.

13. Method for inserting a wood screw (100) according to one of claims 1 to 12 into a wooden substrate (124), wherein the method comprises:
providing the wooden substrate (124), in particular without pre-drilling;
in particular, pre-drill-free and/or self-drilling screwing of the wood screw (100) into the wood substrate (124).

14. Method for manufacturing a wood screw (100), wherein the method comprises:
forming a shaft (102) and a screw tip (104) axially connected thereto;
forming threads (106) that extend circumferentially over at least part of the shaft (102), preferably into the screw tip (104);
forming a first group with at least one arcuate projection (108) between at least two adjacent threads (106) and forming a second group with at least one arcuate projection (108) between two other adjacent threads (106) on the shaft (102) and/or on the screw tip (104), wherein a main direction of the respective protrusion (108) in a top view of the wood screw (100) is tilted counterclockwise by an angle between 5° and 40° relative to an axial direction (110) of the wood screw (100), and all protrusions (108) are arranged so that they are not aligned with each other.

15. Use of a wood screw (100) according to one of claims 1 to 12 for insertion into a wooden substrate (124), in particular without pre-drilling and/or thread cutting.

## Revendications

1. Vis à bois (100), présentant :
une tige (102) ;
une pointe de vis (104) ;
des filets (106) qui s'étendent de manière circonférentielle sur au moins une partie de la tige (102), de manière préférée jusque dans la pointe de vis (104) ;
un premier groupe avec au moins une saillie en forme d'arc (108) entre deux filets (106) voisins et un deuxième groupe avec au moins une saillie en forme d'arc (108) entre deux autres filets (106) voisins, dans laquelle une direction de développement principale de la saillie (108) respective, dans une vue de dessus de la vis à bois (100), est inclinée par rapport à une direction axiale (110) de la vis à bois (100) selon un angle compris entre 5° et 40° dans le sens inverse des aiguilles d'une montre et toutes les saillies (108) sont agencées de manière à ne pas être alignées les unes avec les autres.

2. Vis à bois (100) selon la revendication 1, dans laquelle une extension radiale maximale (r) d'au moins une des saillies en forme d'arc (108) est inférieure à une extension radiale maximale (R) des filets (106).

3. Vis à bois (100) selon la revendication 1 ou 2, dans laquelle au moins une des saillies en forme d'arc (108) s'étend selon un angle de 90° par rapport aux filets (106).

4. Vis à bois (100) selon l'une quelconque des revendications 1 à 3, présentant au moins une des caractéristiques ci-dessous :
au moins une extrémité (112) parmi les deux extrémités (112, 114) axialement opposées d'au moins une des saillies en forme d'arc (108) se termine sur un flanc (116) d'un des filets (106) ;
au moins une extrémité (112) parmi les deux extrémités (112, 114) axialement opposées d'au moins une des saillies en forme d'arc (108) se termine au niveau d'un emplacement de pliage (118) entre un filet (106) et la tige (102) ;
au moins une extrémité (112) parmi les deux extrémités axialement opposées (112, 114) d'au moins une des saillies en forme d'arc (108) se termine au niveau de la tige (102) avec un espacement par rapport à un filet (106) adjacent.

5. Vis à bois (100) selon l'une quelconque des revendications 1 à 4, dans laquelle au moins une des saillies en forme d'arc (108) a son extension radiale maximale (r) au milieu de deux filets voisins du filetage (106).

6. Vis à bois (100) selon l'une quelconque des revendications 1 à 5, dans lequel la vis à bois (104) est conique ou présente une pointe de forage.

7. Vis à bois (100) selon l'une quelconque des revendications 1 à 6, présentant au moins une des caractéristiques ci-dessous :
au moins une des saillies en forme d'arc (108) présente, en particulier dans sa direction d'extension principale et/ou perpendiculairement à sa direction d'extension principale, une forme choisie dans un groupe constitué d'une forme en croissant, d'une forme en demi-cercle et d'une forme comprenant au moins deux sections, se raccordant l'une à l'autre, en particulier se raccordant l'une à l'autre dans la direction axiale, des dites formes ;
au moins une des saillies en forme d'arc (108) s'étend symétriquement ou asymétriquement par rapport aux extrémités opposées (112, 114) de la saillie (108) en direction de deux filets (106) voisins à partir d'une position centrale présentant une extension radiale maximale (r), mais en particulier sans dépasser axialement ceux-ci ;
au moins une des saillies en forme d'arc (108) est réalisée sous la forme d'une fraise à arêtes vives ;
au moins une des saillies en forme d'arc (108) présente des bords émoussés ;
au moins une des saillies en forme d'arc (108) n'est formée que dans la région de la tige (102) ;
au moins une des saillies en forme d'arc (108) n'est formée que dans la région de la pointe de vis (104) ;
au moins une des saillies en forme d'arc (108) s'étend dans une région de transition entre la tige (102) et la pointe de vis (104) ;
plusieurs saillies en forme d'arc (108) sont décalées les unes sous les autres avec un espacement angulaire tangentielle identique les unes par rapport aux autres ;
une contre-dépouille (138) est formée entre une saillie en forme d'arc (108) respective d'une part et au moins un des deux filets adjacents respectifs du filetage (106) afin d'accueillir le matériau d'un substrat en bois (124) lorsque la vis à bois (100) est insérée dans le substrat en bois (124) ;
réalisée en vue d'une insertion sans pré-perçage dans un substrat en bois (124).

8. Vis à bois (100) selon l'une quelconque des revendications 1 à 7, présentant au moins une saillie (108) supplémentaire qui s'étend sur un, en particulier exactement un, des filets (106), en particulier qui croise un des filets (106).

9. Vis à bois (100) selon la revendication 8, présentant au moins une des caractéristiques ci-dessous :
au moins une saillie (108) supplémentaire est en forme d'arc, en particulier en forme de croissant ;
présentant une pluralité de saillies (108) supplémentaires s'étendant sur un, en particulier sur exactement un, des filets (106) et espacées les unes des autres dans la direction tangentielle et agencées de manière circonférentielle autour de la tige (102) ;
au moins une saillie (108) supplémentaire est formée dans une région de la tige (102) à laquelle se raccorde une tête de vis (132) ou une section d'axe (144) non filetée ;
au moins une saillie (108) supplémentaire a son extension radiale maximale dans la région d'un maximum respectif du filet (106) respectif ;
une extension radiale maximale d'au moins une saillie (108) supplémentaire est inférieure à une extension radiale maximale du filet (106) associé.

10. Vis à bois (100) selon l'une quelconque des revendications 8 et 9, dans laquelle au moins une saillie parmi les saillies (108) et au moins une saillie (108) supplémentaire est agencée de manière à s'étendre selon un angle aigu par rapport à une direction axiale (110) de la tige (102).

11. Vis à bois (100) selon l'une quelconque des revendications 1 à 10, présentant au moins une des caractéristiques ci-dessous :
au moins une des saillies (108) est agencée de manière à s'étendre perpendiculairement par rapport aux deux filets (106) voisins entre lesquels est agencé au moins une des saillies (108) ;
au moins une saillie (108) supplémentaire est agencé de manière à s'étendre perpendiculairement par rapport au filet (106) au-dessus duquel s'étend au moins une saillie (108) supplémentaire.

12. Vis à bois (100) selon l'une quelconque des revendications 1 à 11, dans laquelle
au moins un des filets (106) présente au moins une encoche (199), en particulier plusieurs encoches (199) décalées les unes par rapport aux autres dans la direction circonférentielle, dans la région de la pointe de vis (104), en particulier dans la région d'un filet (106) situé le plus en avant au niveau de la pointe de vis (104).

13. Procédé d'insertion d'une vis à bois (100) selon l'une quelconque des revendications 1 à 12 dans un substrat en bois (124), dans lequel le procédé comprend les étapes consistant à :
fournir le substrat en bois (124), en particulier sans pré-perçage ;
visser, en particulier sans pré-perçage et/ou par auto-taraudage, la vis à bois (100) dans le substrat en bois (124).

14. Procédé de fabrication d'une vis à bois (100), dans lequel le procédé comprend les étapes consistant à :
former une tige (102) et une pointe de vis (104) se raccordant axialement à ladite tige ;
former des filets (106) qui s'étendent de manière circonférentielle sur au moins une partie de la tige (102), de manière préférée jusqu'à la pointe de vis (104) ;
former un premier groupe avec au moins une saillie en forme d'arc (108) entre au moins deux filets (106) voisins et former un deuxième groupe avec au moins une saillie en forme d'arc (108) entre deux autres filets (106) voisins sur la tige (102) et/ou sur la pointe de vis (104), dans lequel une direction de développement principale de la saillie (108) respective, dans une vue de dessus de la vis à bois (100), est inclinée par rapport à une direction axiale (110) de la vis à bois (100) selon un angle compris entre 5° et 40° dans le sens inverse des aiguilles d'une montre et toutes les saillies (108) sont agencées de manière à ne pas être alignées les unes avec les autres.

15. Utilisation d'une vis à bois (100) selon l'une quelconque des revendications 1 à 12 permettant une insertion, en particulier sans pré-perçage et/ou par taraudage, dans un substrat en bois (124).
